(19) Europäisches Patentamt
European Patent Office
Office européen des brevets

(11) EP 2 835 405 A1

(12) # EUROPEAN PATENT APPLICATION
published in accordance with Art. 153(4) EPC

(43) Date of publication:
**11.02.2015 Bulletin 2015/07**

(21) Application number: **12873640.2**

(22) Date of filing: **04.04.2012**

(51) Int Cl.:
***C09J 7/00*** *(2006.01)* ***C09J 7/02*** *(2006.01)*
***C09J 133/00*** *(2006.01)* ***C09J 133/06*** *(2006.01)*

(86) International application number:
**PCT/JP2012/002353**

(87) International publication number:
**WO 2013/150563 (10.10.2013 Gazette 2013/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Nitto Denko Corporation**
**Ibaraki-shi, Osaka 567-8680 (JP)**

(72) Inventors:
- **OGAWA, Takuma**
**Ibaraki-shi**
**Osaka 567-8680 (JP)**
- **INOKUCHI, Shinji**
**Ibaraki-shi**
**Osaka 567-8680 (JP)**
- **YAMANAKA, Eiji**
**Ibaraki-shi**
**Osaka 567-8680 (JP)**
- **HIGUCHI, Naoaki**
**Ibaraki-shi**
**Osaka 567-8680 (JP)**
- **HIROSE, Tetsuya**
**Ibaraki-shi**
**Osaka 567-8680 (JP)**

(74) Representative: **Grünecker, Kinkeldey,**
**Stockmair & Schwanhäusser**
**Leopoldstrasse 4**
**80802 München (DE)**

(54) **PRESSURE-SENSITIVE ADHESIVE TAPE AND TAPE ROLL**

(57) A pressure-sensitive adhesive tape 10 includes: a pressure-sensitive adhesive layer 12 that contains at least a fine particle and/or a bubble and both the surfaces of which are pressure-sensitive adhesive surfaces; and a release liner 14 having both a first release layer that is provided on one surface of the pressure-sensitive adhesive layer so as to contact the one surface and a second release layer located opposite to the first release layer. The thickness of the pressure-sensitive adhesive layer is 0.2 to 2.0 mm. The second release layer of the release liner is structured such that a holding time measured by a predetermined method is 2500 minutes or longer.

FIG.1

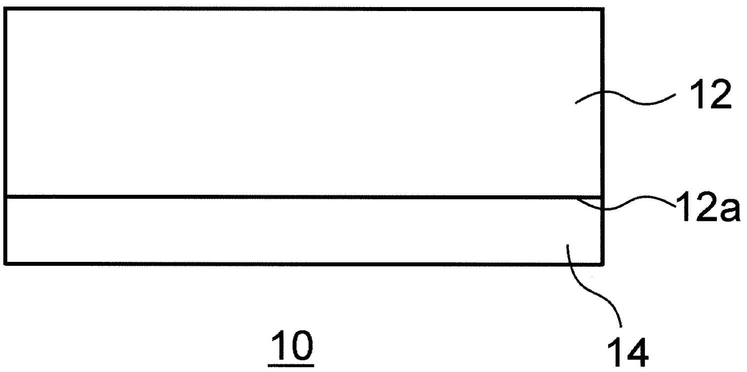


EP 2 835 405 A1

## Description

TECHNICAL FIELD

The present invention relates to a pressure-sensitive adhesive tape. The invention particularly relates to a tape roll (double-sided pressure-sensitive adhesive tape wound body) in which a pressure-sensitive adhesive layer, both the surfaces of which are pressure-sensitive adhesive surfaces, and a release liner laminated on the pressure-sensitive adhesive layer are wound into a roll shape.

BACKGROUND ART

From the past, double-sided pressure-sensitive adhesive tapes, both the surfaces of which are pressure-sensitive adhesive surfaces, are widely used as means for joining members together. In particular, acrylic double-sided pressure-sensitive adhesive tapes, each having an acrylic pressure-sensitive adhesive layer as the pressure-sensitive adhesive layer, are excellent: in light resistance, weatherability, and oil resistance, etc.; in pressure-sensitive adhesive properties such as pressure-sensitive adhesive force and cohesive force; and in anti-aging properties such as heat resistance and weatherability, and hence they are widely used. The applications of the acrylic pressure-sensitive adhesive tapes particularly include an application to adherends having low polarity, such as polystyrene, ABS, and polycarbonate, which are widely used as materials for home electronic appliances and building materials, etc.

Related Art Documents

Patent Documents

[Patent Document 1] Japanese Patent Application Publication No. 1998-509198
[Patent Document 2] Japanese Patent Application Publication No. 1994-207151
[Patent Document 3] Japanese Patent Application Publication (Translation of PCT Application) No. 1999-504054
[Patent Document 4] Japanese Patent Application Publication No. 2001-49200
[Patent Document 5] Japanese Patent Application Publication No. 2003-49130
[Patent Document 6] Japanese Patent Application Publication No. 1994-200225
[Patent Document 7] Japanese Patent Application Publication No. 2005-239831

DISCLOSURE OF THE INVENTION

PROBLEM TO BE SOLVED BY THE INVENTION

When a pressure-sensitive adhesive tape is stored in the state of being wound into a roll shape, part of a pressure-sensitive adhesive may protrude from a side portion of the roll, depending on storage conditions or storage states. There is the problem that such a phenomenon becomes remarkable when, in a double-sided pressure-sensitive adhesive tape wound body in which a pressure-sensitive adhesive layer, both the surfaces of which are pressure-sensitive adhesive surfaces, and a release liner laminated on the pressure-sensitive adhesive layer are wound into a roll shape, the thickness of the pressure-sensitive adhesive layer is made large or fine particles and/or bubbles are contained in the pressure-sensitive adhesive layer in order to improve adhesive performance.
The present invention has been made in view of these situations, and a purpose of the invention is to provide a technique in which oozing of a pressure-sensitive adhesive from a pressure-sensitive adhesive tape wound into a roll shape is suppressed.

MEANS FOR SOLVING THE PROBLEM

An aspect of the present invention is a pressure-sensitive adhesive tape. The pressure-sensitive adhesive tape includes: a pressure-sensitive adhesive layer that contains at least a fine particle and/or a bubble and both the surfaces of which are pressure-sensitive adhesive surfaces; and a release liner having both a release layer (a) that is provided on one surface (1) of the pressure-sensitive adhesive layer so as to contact the one surface (1) and a back surface release layer (b) located opposite to the release layer (a). The thickness of the pressure-sensitive adhesive layer is 0.2 to 2.0 mm. The back surface release layer (b) of the release liner is structured such that a holding time, measured in the following way (i) to (iv), is 2500 minutes or longer:

(i) a test piece (size: 25 mm in width x 100 mm in length), having the same material as that of the release liner, is provided so as to be fixed to a bakelite plate with the back surface release layer (b) oriented upward;
(ii) the pressure-sensitive adhesive tape (size: 25 mm in width x 100 mm in length) is provided, and the other surface (2) of the pressure-sensitive adhesive layer is attached to the back surface release layer (b) of the test piece such that a contact area becomes 25 mm in width x 40 mm in length;
(iii) the pressure-sensitive adhesive tape is pressure-bonded by moving a 5-kg roller one way; and
(iv) a holding time, until the pressure-sensitive adhesive tape drops off from the test piece, is measured by applying a load of 1.96 N (0.2 kgf) to an end portion of the pressure-sensitive adhesive tape, the end portion not contacting the test piece, in a longitudinal direction of the pressure-sensitive adhesive tape and in an environment of an ambient temperature of 40°C.

According to this aspect, a pressure-sensitive adhesive tape can be achieved, in which oozing of a pressure-sensitive adhesive is suppressed.
Peeling force, occurring when the release liner is peeled from the pressure-sensitive adhesive layer in a 180°-peeling direction, at a tensile speed of 300 mm/min, and in an environment of an ambient temperature of 23°C, may be 1.0 [N/25 mm] or more.
The release liner may include: a base layer containing a polyolefin resin; and a release layer (a) that contains low-density polyethylene and is provided on at least one side of the base layer so as to contact the pressure-sensitive adhesive layer.
Alternatively, the release liner may include: a base layer containing a polyolefin resin; a release layer (a) that contains linear low-density polyethylene and is provided on one side of the base layer so as to contact the pressure-sensitive adhesive layer; and a back surface release layer (b) that contains linear low-density polyethylene and is provided on the other side of the base layer.
The pressure-sensitive adhesive layer may include: a core layer containing an acrylic polymer (A), a fine particle (B) and/or a bubble (C); and a surface layer that is provided on one or both sides of the core layer and contains an acrylic polymer (D) and a (meth)acrylic polymer (E) having a weight average molecular weight ($M_{WE}$) of $1000 \leq M_{WE} < 30000$.
The content of the (meth) acrylic polymer (E) may be 5 to 45 parts by mass, based on 100 parts by mass of the acrylic polymer (D).
Each of the acrylic polymer (A) and the acrylic polymer (D) may contain a (meth)acrylic acid alkyl ester as a monomer major component.
Another aspect of the present invention is a tape roll. In the tape roll, the pressure-sensitive adhesive tape is wound into a roll shape. According to this aspect, oozing of the pressure-sensitive adhesive can be suppressed even in the state of being wound into a roll shape.

## ADVANTAGE OF THE INVENTION

According to the present invention, oozing of a pressure-sensitive adhesive can be suppressed.

## BRIEF DESCRIPTION OF THE DRAWINGS

Fig. 1 is a schematic sectional view illustrating a structure of an acrylic pressure-sensitive adhesive tape according to an embodiment;
Fig. 2 is a schematic sectional view illustrating a structure of a pressure-sensitive adhesive layer illustrated in Fig. 1;
Fig. 3 is a schematic sectional view illustrating a structure of a release liner illustrated in Fig. 1;
Fig. 4(a) is a top view of a provided bakelite plate;
Fig. 4(b) is a side view of the bakelite plate illustrated in Fig. 4(a);
Fig. 5(a) is a top view of a state where the release liner is attached to the bakelite plate by using a double-sided pressure-sensitive adhesive tape;
Fig. 5(b) is a side view of the state in Fig. 5(a);
Fig. 6(a) is a top view of a state where the acrylic pressure-sensitive adhesive tape is attached to a second release layer (back surface release layer (b)) of the release liner;
Fig. 6(b) is a side view of the state in Fig. 6(a); and
Fig. 7 is a view illustrating a situation where a test piece is subjected to a creep test.

BEST MODE FOR CARRYING OUT THE INVENTION

Hereinafter, preferred embodiments for carrying out the present invention will be described in detail with reference to the accompanying drawings and tables.

The shape of a pressure-sensitive adhesive tape according to the present embodiment is not particularly limited, and it may be a sheet shape in addition to an elongated one like a tape. Hereinafter, a tape-shaped pressure-sensitive adhesive tape, both the surfaces of which are pressure-sensitive adhesive surfaces, will be described.

Fig. 1 is a schematic sectional view illustrating a structure of an acrylic pressure-sensitive adhesive tape 10 according to an embodiment. The acrylic pressure-sensitive adhesive tape 10 includes: a pressure-sensitive adhesive layer 12, both the surfaces of which are pressure-sensitive adhesive surfaces; and a release liner 14 provided on one surface 12a of the pressure-sensitive adhesive layer.

Fig. 2 is a schematic sectional view illustrating a structure of the pressure-sensitive adhesive layer 12 illustrated in Fig. 1. The pressure-sensitive adhesive layer 12 includes: a core layer 16; a surface layer 18a provided on one surface of the core layer 16; and a surface layer 18b provided on the other surface of the core layer 16. Hereinafter, the surface layers 18a and 18b are collectively referred to as a surface layer 18. The core layer 16 has: a pressure-sensitive adhesive composition 20; a fine particle 22 contained in the pressure-sensitive adhesive composition 20; and a bubble 24 formed in the pressure-sensitive adhesive composition 20. Alternatively, the pressure-sensitive adhesive composition 20 may contain either the fine particle 22 or the bubble 24.

Fig. 3 is a schematic sectional view illustrating a structure of the release liner 14 illustrated in Fig. 1. The release liner 14 includes: a base layer 26; a first release layer (release layer (a)) 28 that is provided on one side of the base layer 26 and functions as a surface layer contacting the one surface 12a of the pressure-sensitive adhesive layer 12; and a second release layer (back surface release layer (b)) 30 that functions as a surface layer provided on the other side of the base layer 26.

Hereinafter, the structure of each of the release liner 14 and the pressure-sensitive adhesive layer 12 will be described in detail.

[Release Liner]

The release liner according to the present embodiment has a layered structure of at least two layers, one layer of which is a surface layer as a release layer provided on at least one side of the base layer. The release layer may be provided directly on the surface of the base layer, or be laminated via another layer such as an adhesive layer.

(Surface Layer)

In the release liner according to the present embodiment, it is preferable that the first release layer (release layer (a)) 28, which is a surface layer provided on the side contacting the pressure-sensitive adhesive layer 12, is formed of low-density polyethylene and an olefin elastomer that are major components. The total amount of the low-density polyethylene and the olefin elastomer is preferably 60% by mass or more, and more preferably 90% by mass or more, based on the total mass of the surface layer. By causing the first release layer 28 to have such a polymer structure, peelability can be improved.

The "low-density polyethylene (LDPE)" in the present embodiment refers to the polyethylene whose density ($d_P$) is 900 (kg/$m^3$) $\leq d_p <$ 930 (kg/$m^3$) based on JIS K 6922-2. The "low-density polyethylene" in the embodiment includes: so-called "low-density polyethylene" and "ultra-low-density polyethylene" each having long-chain branching, which can be obtained by polymerizing an ethylene monomer with a high-pressure method; and "linear low-density polyethylene (LLDPE)" (the number of carbon atoms in short-chain branching is preferably 1 to 6), which can be obtained by polymerizing ethylene and a $C_{3-8}$ $\alpha$-olefin monomer with a low-pressure method. Among them, the linear low-density polyethylene (LLDPE) is particularly preferred as the low-density polyethylene to be used for the surface layer of the release liner according to the present embodiment, because physical properties such as peelability can be easily controlled due to the copolymerization of $\alpha$-olefin. In the aforementioned LLDPE, 1-hexene and 1-octene are preferred as the comonomer component to be used along with ethylene.

The olefin elastomer is not particularly limited as far as it is $\alpha$-olefin or a copolymer containing $\alpha$-olefin and is a compound exhibiting an elastomeric property; and examples of the olefin elastomer include, for example, an ethylene-$\alpha$-olefin copolymer, propylene-$\alpha$-olefin copolymer, ethylene-propylene-diene copolymer, ethylene-vinylacetate copolymer, polybutene, polyisobutylene, and chlorinated polyethylene, etc.

Among the aforementioned olefin elastomers, an ethylene-$\alpha$-olefin copolymer elastomer is particularly preferred from the viewpoints of peelability and compatibility. In the present embodiment, the ethylene-$\alpha$-olefin copolymer, the density (d) of which is less than 900 (kg/$m^3$) based on JIS K 6922-2 (e.g., 860 (kg/$m^3$) $\leq$ d < 900 (kg/$m^3$)), shall be included in the olefin elastomers. The $\alpha$-olefin component in the ethylene-$\alpha$-olefin copolymer elastomer is not particularly

limited, but α-olefins having approximately 3 to 10 carbons, such as propylene and butene, are preferred, and at least one α-olefin (comonomer), selected from the group consisting of propylene, butene-1, hexene-1, 4-methylpentene-1, and the octene-1, can be used.

As the low-density polyethylene and olefin elastomer, commercially available products can also be used, and examples of the low-density polyethylene include, for example, "MORETEC 0628D and 0218CN" (LLDPE) made by Prime Polymer Co., Ltd., and the like. Examples of the olefin elastomer include "TAFMER P" (ethylene-propylene copolymer) made by Mitsui Chemicals, Inc., and the like. Among them, "TAFMER P P0180 and P0280" can be preferably used from the viewpoint of a film forming property.

The low-density polyethylene and olefin elastomer may be used alone or in combination of two or more thereof, respectively.

In the surface layer of the release liner according to the present embodiment, the content of the olefin elastomer is preferably 0 to 45 parts by mass, more preferably 0 to 40 parts by mass, and still more preferably 5 to 30 parts by mass, based on 100 parts by mass of the low-density polyethylene. Peelability is improved by adding the olefin elastomer. On the other hand, if the content is more than 45 parts by mass, the adhesive force with the pressure-sensitive adhesive layer becomes small, and hence, when the pressure-sensitive adhesive tape is wound into a roll shape, the release liner is likely to slip when external force is applied, the pressure-sensitive adhesive is likely to protrude, or the surface layer of the release liner is likely to be flexible; thereby processability may be decreased or blocking may be caused.

In addition to the low-density polyethylene and olefin elastomer, the surface layer of the release liner according to the present embodiment may contain various additives such as a colorant (pigment, dye), filler, lubricant, anti-aging agent, antioxidant, ultraviolet absorber, flame retardant, and stabilizer, within a range not impairing the advantages of the present invention.

When the release liner of the present embodiment has a three-layered structure in which surface layers are provided on both the surfaces of the base layer, the surface layers on both the sides may be formed to contain polymers or compound compositions different from each other, as far as the aforementioned issues are satisfied. From the viewpoint of preventing curl of the release liner, it is preferable that the surface layers on both the sides contain the same polymer as each other, and it is more preferable that they have the same composition as each other. So, it is preferable that the second release layer (back surface release layer (b)) 30, provided on the other side of the base layer 26, contains low-density polyethylene, similarly to the first release layer (release layer (a)) 28.

(Base Layer)

The base layer 26 of the release liner 14 of the present embodiment is formed by using a polyolefin resin as a major component. The content of the polyolefin resin is preferably 50% by mass or more, and more preferably 80% by mass or more, based on the total mass of the base layer. Because a polyolefin resin is relatively more flexible than a polyester resin such as polyethylene terephthalate, the followability of the release liner to a deformation of an adherend is improved when a polyolefin resin is used in the base layer of the release liner, thereby allowing pop-off or peeling of the release liner, possibly occurring when stored or used in a high-temperature environment, to be suppressed. A release liner, in which a polyester resin is used in a base layer, cannot follow a slight deformation of an automobile emblem made of a resin, for example, when stored in the state of being attached to the emblem, or the like, and hence pop-off or peeling of the release liner may be caused, so that productivity may be decreased.

As the aforementioned polyolefin resin, polypropylene (PP) and high-density polyethylene (HDPE) are preferred from the viewpoints of maintaining the strength of the release liner and improving the processability. That is, the base layer of the release liner according to the present embodiment contains polypropylene (PP) and/or high-density polyethylene (HDPE) preferably in an amount of 50% by mass or more, and more preferably in an amount of 80% by mass or more, based on the total mass of the base layer. Among them, a transparent or translucent resin is preferred in an application in which the visibility for the facing surface side is required, for example, when being processed, and random polypropylene is more preferred. The "high-density polyethylene" in the present embodiment refers to the polyethylene whose density is 930 ($kg/m^3$) or more (preferably 942 to 960 ($kg/m^3$)) based on JIS K 6922-2.

As the aforementioned olefin resin, commercially available products can also be used, and examples of the products include, for example: "Noblen WF836DG3 and FS3611" made by Sumitomo Chemical Co., Ltd., and "Novatec PP EG6D" made by Japan Polypropylene Corporation (above are PP) ; "HI-ZEX 3300F" made by Prime Polymer Co. Ltd., and "Nipolon Hard 4050" made by TOSOH CORPORATION (above are HDPE); and the like.

A colorant, such as a pigment, may be added in the base layer of the release liner of the present embodiment, from the viewpoint of improving both the distinguishability of part numbers, etc., and handling property by coloring. As the pigment, publicly-known and commonly-used organic and inorganic pigments can be used depending on the type of desired color. Examples of the pigments include, for example, carbon black, iron oxide, titanium oxide, titan yellow, cobalt blue, cadmium red, azo lake pigments (red, yellow), phthalocyanine pigments, and quinacridone pigments, etc.

An antistatic agent may be added in the base layer of the release liner of the present embodiment, from the

viewpoints of improving workability and preventing destruction of the release layer. As the antistatic agent, publicly-known and commonly-used a non-ionic antistatic agent, anionic antistatic agent, or cationic antistatic agent can be used.

In addition to the resin components, colorant, and antistatic agent, various additives, such as a filler, lubricant, anti-aging agent, antioxidant, ultraviolet absorber, flame retardant, and stabilizer, may be blended in the base layer of the release liner of the present embodiment, within a range not impairing the advantages of the present invention.

In the release liner of the present embodiment, the thickness of each of the surface layers is 80 μm or less, preferably 30 μm or less, and more preferably 10 μm or less. When containing an olefin elastomer, the surface layer of the embodiment becomes flexible. Accordingly, as the thickness of the each surface layer becomes larger, the strength and stiffness of the whole release liner becomes smaller, and there is the tendency that, when being cut, the surface layer stretches and the "cutting quality" is deteriorated. That is, if the thickness thereof is more than 80 μm, punching processability becomes decreased and a processing defect, such as "mustache", "burr", or the like, is likely to be caused. The lower limit of the thickness thereof is not particularly limited, but when the surface layer is provided by co-extrusion, it is preferable that the thickness is 5 μm or more, from the viewpoint of uniform lamination by co-extrusion. When the surface layer is provided by coating, it is preferable that the thickness is approximately 0.1 to 5 μm.

In the case of a three-layered structure in which the surface layers are provided on both the surfaces of the base layer, the ratio between the surface layers on both the sides (ratio of the thickness of a surface layer having a larger thickness to that of a surface layer having a smaller thickness) is preferably 5 or less, and more preferably 3 or less. If the ratio between them is more than 5, curl may be caused in the release liner.

In the release liner of the present embodiment, the thickness of the base layer is preferably 30 to 190 μm, and more preferably 50 to 170 μm. The base layer plays the role of providing strength to the release liner. If the thickness of the base layer is less than 30 μm, the strength and stiffness of the release liner become small, and the punching processability or handling property may be decreased. On the other hand, if the thickness is more than 200 μm, the stiffness becomes large and it becomes difficult for the release liner to follow a curved emblem, etc., and hence pop-off or peeling may be caused.

The thickness (total thickness) of the release liner of the present embodiment is preferably 50 to 200 μm, and more preferably 100 to 180 μm.

The Young's modulus of the release liner of the present embodiment is preferably 150 to 700 MPa, and more preferably 200 to 500 MPa, from the viewpoint of punching processability.

The release liner of the present embodiment can be manufactured by a publicly-known and commonly-used sheet forming method, such as a melt film forming method (T-die method, inflation method), solution film forming method, or the like. The lamination method of the release liner of the present embodiment is not particularly limited, but a publicly-known and commonly-used method, such as a co-extrusion method, dry lamination method, wet lamination method, or the like, can be used. Among them, a co-extrusion method is preferred from the viewpoint of productivity.

The surface layer of the release liner of the present embodiment may be subjected to mat processing. By performing mat processing on the surface of the surface layer, the terminal peelability from a pressure-sensitive adhesive surface and the anti-blocking property can be improved. Examples of the mat processing include, for example: a method of polishing the surface of the surface layer with a buff or sandpaper; a sandblast treatment in which fine scratches are provided to the surface of the surface layer by strongly blowing, against the surface, fine particles, such as glass beads, carborundum, metal particles, or the like, along with compressed air; emboss processing by an emboss roll; a chemical mat treatment by a chemical; and the like.

In the release liner of the present embodiment, it is preferable that the arithmetic mean roughness (Ra) of the surface of the release layer (a), the release layer (a) being provided on one surface (1) of the pressure-sensitive adhesive layer so as to contact the one surface (1), is approximately 0.01 to 5.0 μm, although Ra is also related to the thickness of the later-described pressure-sensitive adhesive layer. In particular, when the thickness of the pressure-sensitive adhesive layer is 200 to 2000 μm (0.2 to 2.0 mm), Ra is preferably 0.03 to 2.0 μm, and more preferably 0.05 to 1.2 μm. If the surface of the release liner is too coarse, the pressure-sensitive adhesive layer permeates between the concavities and convexities of the surface of the release liner while the pressure-sensitive adhesive layer is contacting the release liner (storage period, etc.), because the pressure-sensitive adhesive layer is soft; and the contact area is increased and the peeling force is changed over time, and hence the stability of the peelability may be decreased. The aforementioned permeation property becomes more remarkable as the thickness of the pressure-sensitive adhesive layer is larger.

In the release liner of the present embodiment, it is preferable that the arithmetic mean roughness (Ra) of the surface of the back surface release layer (b) located opposite to the release layer (a) is approximately 0.03 to 5.0 μm, although Ra is also related to the thickness of the later-described pressure-sensitive adhesive layer. In particular, when the thickness of the pressure-sensitive adhesive layer is 200 to 2000μ m (0.2 to 2.0 mm), Ra is preferably 0.05 to 5.0 μm, and more preferably 0.07 to 2.0 μm.Additionally, it is preferable that the arithmetic mean roughness (Ra) of the surface of the back surface release layer (b) is larger than that of the surface of the release layer (a).

If the surface roughness of the surface of the back surface release layer (b) is smaller than the aforementioned range, the rewinding property may be decreased; on the other hand, if the surface roughness is larger than the range,

the temporal stability of the peeling force may be decreased, similarly to the surface roughness on the side contacting the pressure-sensitive adhesive layer.

[Pressure-Sensitive Adhesive Layer]

Subsequently, each component of the pressure-sensitive adhesive layer 12 will be described in detail. The core layer 16 included in the pressure-sensitive adhesive layer 12 has the pressure-sensitive adhesive composition 20 and the fine particle 22, and the bubble 24 is formed in the core layer 16. Hereinafter, each component of the core layer 16 will be described in detail.

(Pressure-Sensitive Adhesive Composition)

The acrylic polymer (A) is used as a pressure-sensitive adhesive composition that forms the core layer 16. The acrylic polymer (A) contains, as a monomer unit, a (meth)acrylic acid alkyl ester having, for example, a $C_{1-20}$ linear or branched alkyl group in an amount of 50% by mass or more. Alternatively, the acrylic polymer (A) may also have a structure formed only by a (meth) acrylic acid alkyl ester having a $C_{1-20}$ alkyl group or by a combination of two or more thereof. The acrylic polymer (A) can be obtained by subjecting the (meth) acrylic acid alkyl ester to polymerization (e.g., solution polymerization, emulsion polymerization, UV polymerization), along with a polymerization initiator.

The ratio (R) of the (meth) acrylic acid alkyl ester having a $C_{1-20}$ alkyl group is approximately 50% by mass $\leq$ R $\leq$ 99. 9% by mass, preferably approximately 60% by mass $\leq$ R $\leq$ 95% by mass, and more preferably approximately 70% by mass $\leq$ R $\leq$ 93% by mass, based on the total mass of the monomer components for preparing the acrylic polymer (A).

Examples of the (meth) acrylic acid alkyl ester having a $C_{1-20}$ alkyl group include, for example: (meth) acrylic acid $C_{1-20}$ alkyl esters [preferably (meth) acrylic acid $C_{2-14}$ alkyl esters, and more preferably (meth) acrylic acid $C_{2-10}$ alkyl esters], such as (meth)acrylic acid methyl, (meth)acrylic acid ethyl, (meth)acrylic acid propyl, (meth)acrylic acid isopropyl, (meth)acrylic acid butyl, (meth)acrylic acid isobutyl, (meth)acrylic acid s-butyl, (meth)acrylic acid t-butyl, (meth)acrylic acid pentyl, (meth)acrylic acid isopentyl, (meth)acrylic acid hexyl, (meth)acrylic acid heptyl, (meth)acrylic acid octyl, (meth)acrylic acid 2-ethylhexyl, (2-ethylhexyl(meth)acrylate), (meth)acrylic acid isooctyl, (meth)acrylic acid nonyl, (meth)acrylic acid isononyl, (meth)acrylic acid decyl, (meth)acrylic acid isodecyl, (meth)acrylic acid undecyl, (meth)acrylic acid dodecyl, (meth)acrylic acid tridecyl, (meth)acrylic acid tetradecyl, (meth)acrylic acid pentadecyl, (meth)acrylic acid hexadecyl, (meth)acrylic acid heptadecyl, (meth)acrylic acid octadecyl, (meth) acrylic acid nonadecyl, and (meth) acrylic acid eicosyl, etc. Herein, the (meth) acrylic acid alkyl ester means an acrylic acid alkyl ester and/or a methacrylic acid alkyl ester, and all of the "(meth) ···" expressions have the same meaning.

Examples of the (meth) acrylic acid esters other than the (meth)acrylic acid alkyl esters include, for example: (meth) acrylic acid esters having an alicyclic hydrocarbon group, such as cyclopentyl(meth)acrylate, cyclohexyl(meth)acrylate, and isobornyl (meth) acrylate; (meth) acrylic acid esters having an aromatic hydrocarbon group, such as phenyl(meth)acrylate; (meth)acrylic acid esters obtained from terpene compound derivative alcohols; and the like.

For the purpose of modifying cohesive force, heat resistance, and cross-linking property, etc., the acrylic polymer (A) may contain, if necessary, another monomer component (copolymerizable monomer) that is copolymerizable with the (meth)acrylic acid alkyl ester. Accordingly, the acrylic polymer (A) may contain a copolymerizable monomer along with the (meth) acrylic acid alkyl ester as a major component. A monomer having a polar group can be preferably used as the copolymerizable monomer.

Specific examples of the copolymerizable monomer include: carboxyl group-containing monomers, such as acrylate, methacrylic acid, carboxy ethyl acrylate, carboxypentyl acrylate, itaconic acid, maleic acid, fumaric acid, crotonic acid, and isocrotonic acid; hydroxyl group-containing monomers, such as (meth)acrylic acid hydroxyalkyls including (meth)acrylic acid hydroxyethyl, (meth)acrylic acid hydroxypropyl, (meth)acrylic acid hydroxybutyl, (meth)acrylic acid hydroxyhexyl, (meth)acrylic acid hydroxyoctyl, (meth)acrylic acid hydroxydecyl, (meth)acrylic acid hydroxy lauryl, and (4-hydroxymethyl cyclohexyl) methyl methacrylate; acid anhydride group-containing monomers, such as maleic acid anhydride and itaconic acid anhydride; sulfonic group-containing monomers, such as styrenesulfonic acid, allylsulfonic acid, 2-(meth)acrylamide-2-methylpropanesulfonic acid, (meth)acrylamide propanesulfonic acid, sulfopropyl(meth)acrylate, and (meth)acryloyloxy naphthalenesulfonic acid; phosphate group-containing monomers, such as 2-hydroxyethyl acryloyl phosphate; (N-substituted) amide monomers, such as (meth)acrylamide, N,N-dialkyl(meth)acrylamides including N,N-dimethyl(meth)acrylamide, N,N-diethyl(meth)acrylamide, N,N-dipropyl(meth)acrylamide, N,N-diisopropyl(meth)acrylamide, N,N-di(n-butyl)(meth)acrylamide, and N,N-di(t-butyl)(meth)acrylamide, etc., N-ethyl(meth)acrylamide, N-isopropyl(meth)acrylamide, N-butyl(meth)acrylamide, N-n-butyl(meth)acrylamide, N-methylol(meth)acrylamide, N-ethylol(meth)acrylamide, N-methylol propane(meth)acrylamide, N-methoxymethyl(meth)acrylamide, N-methoxyethyl(meth)acrylamide, N-butoxymethyl(meth)acrylamide, and N-acryloyl morpholine; succinimide monomers, such as N-(meth)acryloyloxy methylene succinimide, N-(meth)acryloyl-6-oxy hexamethylene succinimide, and N-(meth)acryloyl-8-oxy hexamethylene succinimide; maleimide monomers, such as N-cyclohexyl maleimide, N-isopropylmaleimide, N-lauryl maleimide, and N-phenyl maleimide; itaconimide monomers, such as N-methylitaconimide, N-ethylitaconimide, N-butylitaconimide, N-octylitaconimide, N-2-ethylhexylitaconimide, N-cyclohexylitaconimide, and N-laurylitaconimide; nitrogen-containing heterocyclic monomers, such as N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-(meth)acryloyl-2-pyrrolidone, N-(meth)acryloylpiperidine, N-(meth)acryloyl pyrrolidine, N-vinyl morpholine, N-vinyl-2-piperidone, N-vinyl-3-morpholinone, N-vinyl-2-caprolactam, N-vinyl-1,3-oxazine-2-one, N-vinyl-3,5-morpholinedione,N-vinyl pyrazole, N-vinyl isoxazole, N-vinyl thiazole, N-vinyl isothiazole, and N-vinyl pyridazine; N-vinyl carboxylic acid amides; lactam monomers, such as N-vinyl caprolactam; cyanoacrylate monomers, such as acrylonitrile and methacrylonitrile; (meth)acrylic acid aminoalkyl monomers, such as (meth)acrylic acid aminoethyl, (meth)acrylic acid N,N-dimethylaminoethyl, (meth)acrylic acid N,N-dimethylaminoethyl, and (meth)acrylic acid t-butylaminoethyl; (meth)acrylic acid alkoxy alkyl monomers, such as (meth)acrylic acid methoxyethyl and (meth)acrylic acid ethoxyethyl; styrene monomers, such as styrene and $\alpha$-methylstyrene; epoxy group-containing acrylic monomers, such as (meth)acrylic acid glycidyl; glycol acrylic ester monomers, such as (meth)acrylic acid polyethylene glycol, (meth)acrylic acid polypropylene glycol, (meth)acrylic acid methoxy ethylene glycol, and (meth)acrylic acid methoxy polypropylene glycol; acrylic acid ester monomers having a heterocycle, halogen atom, silicon atom, or the like, such as (meth)acrylic acid tetrahydrofurfuryl, fluorine atom-containing (meth)acrylate, and silicone(meth)acrylate; olefin monomers, such as isoprene, butadiene, and isobutylene; vinyl ether monomers, such as methyl vinyl ether and ethyl vinyl ether; vinyl esters, such as vinyl acetate and vinyl propionate; aromatic vinyl compounds, such as vinyl toluene and styrene; olefins or dienes, such as ethylene, butadiene, isoprene, and isobutylene; vinyl ethers, such as vinyl alkyl ether; vinyl chloride; sulfonic acid group-containing monomers, such as vinyl sulfonate sodium; imide group-containing monomers, such as cyclohexyl maleimide and isopropyl maleimide; isocyanate group-containing monomers, such as 2-isocyanate ethyl(meth)acrylate; amide group-containing vinyl monomers, such as N-acryloyl morpholine; and the like. These copolymerizable monomer can be used alone or in combination of two or more thereof.

The use amount of the copolymerizable monomer is not particularly limited, but the copolymerizable monomer can be contained in an amount usually within a range of approximately 0.1 to approximately 40% by mass, preferably within a range of approximately 0.5 to approximately 30% by mass, and more preferably within a range of approximateky 1 to approximately 20% by mass, based on the total mass of the monomer components for preparing the acrylic polymer (A).

By containing approximately 0.1% by mass or more of the copolymerizable monomer, a decrease in the cohesive force of the acrrylic pressure-sensitive adhesive that forms the core layer 20 can be prevented, and high shear force can be obtained. Further, by containing the copolymerizable monomer in an amount of approximately 40% by mass or less, the cohesive force of the acrylic pressure-sensitive adhesive that forms the core layer 20 can be prevented from becoming too large, and the tackiness at normal temperature (25°C) can be improved.

A polyfunctional monomer may be contained, if necessary, in the acrylic polymer (A) in order to adjust the cohesive force of an acrylic pressure-sensitive adhesive tape.

Examples of the polyfunctional monomer include, for example, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, 1,2-ethylene glycol di(meth)acrylate, 1,6-hexanediol di(meth)acrylate, 1,12-dodecanediol di(meth)acrylate, trimethylolpropane tri(meth)acrylate, tetramethylol methane tri(meth)acrylate, allyl(meth)acrylate, vinyl(meth)acrylate, divinylbenzene, epoxy acrylate, polyester acrylate, urethane acrylate, butyl di(meth)acrylate, and hexyl di(meth)acrylate, etc. Among them, trimethylolpropane tri(meth)acrylate, hexanediol di(meth)acrylate, and dipentaerythritol hexa(meth)acrylate can be preferably used. The polyfunctional (meth) acrylate can be used alone or in combination of two or more thereof.

The use amount of the polyfunctional monomer is changed depending on the molecular weight or the number of functional groups thereof, but the polyfunctional monomer is added in an amount within a range of approximately 0.01 to approximately 3.0% by mass, preferably within a range of approximately 0.02 to approximately 2.0% by mass, and more preferably within a range of approximately 0.03 to approximately 1.0% by mass, based on the total mass of the monomer components for preparing the (meth)acrylic polymer (A).

If the use amount of the polyfunctional monomer is more than approximately 3.0% by mass based on the total mass of the monomer components for preparing the acrylic polymer (A), for example, the cohesive force of the acrylic pressure-sensitive adhesive that forms the core layer 16 becomes too large, and hence the adhesive force may be decreased. On the other hand, if the use amount is less than approximately 0.01% by mass, for example, the cohesive force of the acrylic pressure-sensitive adhesive that forms the core layer 20 may be decreased.

(Polymerization Initiator)

In preparing the acrylic polymer (A), the acrylic polymer (A) can be easily formed by a curing reaction using

heat or ultraviolet rays with the use of a polymerization initiator, such as a thermal polymerization initiator, photo-polymerization initiator (photo-initiator), or the like. In particular, a photo-polymerization initiator can be preferably used in terms of the advantage that a polymerization time can be shortened. The polymerization initiators can be used alone or in combination of two or more thereof.

Examples of the thermal polymerization initiator include, for example: azo polymerization initiators [e.g., 2,2'-azobisisobutyronitrile, 2,2'-azobis-2-methylbutyronitrile, 2,2'-azobis(2-methylpropionic acid)dimethyl, 4,4'-azobis-4-cyanovalerianic acid, azobis isovaleronitrile, 2,2'-azobis(2-amidinopropane)dihydrochloride, 2,2'-azobis[2-(5-methyl-2-imidazoline-2-yl) propane]dihydrochloride, 2,2'-azobis(2-methylpropionamidine)disulfate, and 2,2'-azobis (N,N'-dimethyleneisobutylamidine)dihydrochloride, etc.]; peroxide polymerization initiators (e.g., dibenzoyl peroxide, t-butyl permaleate, and lauroyl peroxide, etc.); redox polymerization initiators; and the like.

The use amount of the thermal polymerization initiator is not particularly limited, but only has to be within a conventional range in which it can be used as a thermal polymerization initiator.

The photo-polymerization initiator is not particularly limited, but, for example, a benzoin ether photo-polymerization initiator, acetophenone photo-polymerization initiator, $\alpha$-ketol photo-polymerization initiator, aromatic sulfonyl chloride photo-polymerization initiator, photoactive oxime photo-polymerization initiator, benzoin photo-polymerization initiator, benzyl photo-polymerization initiator, benzophenone photo-polymerization initiator, ketal photo-polymerization initiator, thioxanthone photo-polymerization initiator, acylphosphine oxide photo-polymerization initiator, or the like, can be used.

Specific examples of the benzoin ether photo-polymerization initiator include, for example, benzoin methyl ether, benzoin ethyl ether, benzoin propyl ether, benzoin isopropyl ether, benzoin isobutyl ether, 2,2-dimethoxy-1,2-diphenylethane-1-one [product name: IRGACURE 651 made by Ciba Specialty Chemicals Corp.], and anisole methyl ether, etc. Specific examples of the acetophenone photo-polymerization initiator include, for example, 1-hydroxycyclohexyl-phenyl-ketone [product name: IRGACURE 184 made by Ciba Specialty Chemicals Corp.], 4-phenoxy dichloroacetophenone, 4-t-butyl-dichloroacetophenone, 1-[4-(2-hydroxyethoxy)-phenyl]-2-hydroxy-2-methyl-1-propane-1 -one [product name: IRGACURE 2959 made by Ciba Specialty Chemicals Corp.], 2-hydroxy-2-methyl-1-phenyl-propane-1-one [product name: DAROCUR 1173 made by Ciba Specialty Chemicals Corp.], and methoxy acetophenone, etc. Specific examples of $\alpha$-ketol photo-polymerization initiator include, for example, 2-methyl-2-hydroxy propiophenone and 1-[4-(2-hydroxyethyl)-phenyl]-2-hydroxy-2-methylpropane-1-one, etc. Specific examples of the aromatic sulfonyl chloride photo-polymerization initiator include, for example, 2-naphthalene sulfonyl chloride, etc. Specific examples of the photoactive oxime photo-polymerization initiator include, for example, 1-phenyl-1,1-propanedione-2-(o-ethoxycarbonyl)-oxime, etc.

Specific examples of the benzoin photo-polymerization initiator include, for example, benzoin, etc. Specific examples of the benzyl photo-polymerization initiator include, for example, benzyl, etc. Specific examples of the benzophenone photo-polymerization initiators include, for example, benzophenone, benzoylbenzoic acid, 3,3'-dimethyl-4-methoxybenzophenone, polyvinyl benzophenone, and $\alpha$-hydroxy cyclohexyl phenyl ketone, etc. Specific examples of the ketal photo-polymerization initiator include, for example, benzyl dimethyl ketal, etc. Specific examples of the thioxanthone photo-polymerization initiato include, for example, thioxanthone, 2-chlorothioxanthone, 2-methyl thioxanthone, 2, 4-dimethyl thioxanthone, isopropyl thioxanthone, 2,4-dichloro thioxanthone, 2, 4-diethyl thioxanthone, isopropyl thioxanthone, 2,4-diisopropyl thioxanthone, and dodecyl thioxanthone, etc.

Examples of the acylphosphine photo-polymerization initiator include, for example, bis(2,6-dimethoxybenzoyl)phenylphosphine oxide, bis(2,6-dimethoxybenzoyl)(2,4,4-trimethylpentyl) phosphine oxide, bis(2,6-dimethoxybenzoyl)-n-butyl phosphine oxide, bis(2,6-dimethoxybenzoyl)-(2-methylpropane-1-yl)phosphine oxide, bis(2,6-dimethoxybenzoyl)-(1-methylpropane-1-yl) phosphine oxide, bis(2,6-dimethoxybenzoyl)-t-butylphosphine oxide, bis(2,6-dimethoxybenzoyl)cyclohexylphosphine oxide, bis(2,6-dimethoxybenzoyl)octylphosphine oxide, bis(2-methoxybenzoyl)(2-methylpropane-1-yl)phosphine oxide, bis(2-methoxybenzoyl)(1-methylpropane-1-yl)phosphine oxide, bis(2,6-diethoxybenzoyl)(2-methylpropane-1-yl)phosphine oxide, bis(2,6-diethoxybenzoyl)(1-methylpropane-1-yl) phosphine oxide, bis(2,6-dibutoxybenzoyl)(2-methylpropane-1-yl) phosphine oxide, bis(2,4-dimethoxybenzoyl)(2-methypropane-1-yl) phosphine oxide, bis(2,4,6-trimethylbenzoyl)(2,4-dipentoxyphenyl) phosphine oxide, bis(2,6-dimethoxybenzoyl)benzyl phosphine oxide, bis(2,6-dimethoxybenzoyl)-2-phenylpropyl phosphine oxide, bis(2,6-dimethoxybenzoyl)-2-phenylethyl phosphine oxide, bis(2,6-dimethoxybenzoyl)benzyl phosphine oxide, bis(2,6-dimethoxybenzoyl)-2-phenylpropyl phosphine oxide, bis(2,6-dimethoxybenzoyl)-2-phenylethyl phosphine oxide, 2,6-dimethoxybenzoyl benzylbutylphosphine oxide, 2,6-dimethoxybenzoyl benzyloctylphosphine oxide, bis(2,4,6-trimethylbenzoyl)-2,5-diisopropylphenylphosphine oxide, bis(2,4,6-trimethylbenzoyl)-2-methylphenylphosphine oxide, bis(2,4,6-trimethylbenzoyl)-4-methylphenylphosphine oxide, bis(2,4,6-trimethylbenzoyl)-2,5-diethylphenylphosphine oxide, bis(2,4,6-trimethylbenzoyl)-2,3,5,6-tetramethylphenylphosphin e oxide, bis(2,4,6-trimethyl benzoyl)-2,4-di-n-butoxy phenylphosphine oxide, 2,4,6-trimethylbenzoyl diphenylphosphine oxide, bis(2,6-dimethoxybenzoyl)-2,4,4-trimethylpentylphosphine oxide, bis(2,4,6-trimethylbenzoyl)isobutylphosphine oxide, 2,6-dimethoxybenzoyl-2,4,6-trimethylbenzoyl-n-butylphosphine oxide, bis(2,4,6-trimethylbenzoyl)phenylphosphine oxide, bis(2,4,6-trimethylbenzoyl)-2,4-dibutoxyphenylphosphine oxide, 1,10-bis[bis(2,4,6-trimethylbenzoyl)phosphine oxide]decane, and tri(2-methylbenzoyl)phosphine oxide, etc.

The use amount of the photo-polymerization initiator is not particularly limited, but the photo-polymerization initiator is combined, for example, in an amount within a range of approximately 0.01 to approximately 5 parts by mass, and preferably within a range of approximately 0.05 to approximately 3 parts by mass, based on 100 parts by mass of the monomer components for preparing the acrylic polymer (A).

If the use amount of the photo-polymerization initiator is less than 0.01 parts by mass, a polymerization reaction may become insufficient. On the other hand, if the use amount of the photo-polymerization initiator is more than 5 parts by mass, an ultraviolet ray does not reach the inside of the pressure-sensitive adhesive layer because the photo-polymerization initiator absorbs an ultraviolet ray; and hence the rate of polymerization is decreased or the molecular weight of the produced polymer becomes small. Accordingly, the cohesive force of the produced pressure-sensitive adhesive layer becomes small, and part of the pressure-sensitive adhesive layer remains on a film when the pressure-sensitive adhesive layer is peeled from the film, so that the film may not be reused. The photo-polymerization initiators may be used alone or in combination of two or more thereof.

Besides the aforementioned polyfunctional monomers, a cross-linking agent can also be used in order to adjust the cohesive force. Commonly-used cross-linking agents can be used as the cross-linking agent. Examples of the cross-linking agent include, for example: an epoxy cross-linking agent, isocyanate cross-linking agent, silicone cross-linking agent, oxazoline cross-linking agent, aziridine cross-linking agent, silane cross-linking gent, alkyl-etherified melamine cross-linking agent, and metal chelate cross-linking agent, etc. In particular, an isocyanate cross-linking agent and an epoxy cross-linking agent can be preferably used.

Specific examples of the isocyanate cross-linking agent include tolylene diisocyanate, hexamethylene diisocyanate, isophorone diisocyanate, xylylene diisocyanate, hydrogenated xylylene diisocyanate, diphenylmethane diisocyanate, hydrogenated diphenylmethane diisocyanate, tetramethyl xylylene diisocyanate, naphthalene diisocyanate, triphenylmethane triisocyanate, polymethylene polyphenyl isocyanate, and these adducts with polyols, such as trimethylolpropane. Alternatively, a compound containing, within a molecule thereof, at least one or more isocyanate groups and at least one or more unsaturated bonds, specifically, 2-isocyanate ethyl(meth)acrylate, or the like, can be used as the isocyanate cross-linking agent. Among them, the use of the compound containing, within a molecule thereof, at least one or more isocyanate groups and at least one or more unsaturated bonds as the isocyanate cross-linking agent is preferable from the viewpoint of further exhibiting the advantages of the present invention.

Examples of the epoxy cross-linking agent include: bisphenol A, epichlorohydrin type epoxy resin,ethyleneglycidylether, polyethylene glycol diglycidyl ether, glycerin diglycidyl ether, glycerin triglycidyl ether, 1,6-hexanediol glycidyl ether, trimethylolpropane triglycidyl ether, diglycidyl aniline, diamine glycidyl amine, N,N,N',N'-tetraglycidyl-m-xylylenediamine, and 1,3-bis(N,N'-diamine glycidyl aminomethyl)cyclohexane, etc.

In the present embodiment, the acrylic polymer (A) can also be prepared as a partial polymer (acrylic polymer syrup) that can be obtained by radiating ultraviolet (UV) rays onto a mixture in which the aforementioned monomer components and the polymerization initiator have been combined, so that the monomer components are partially polymerized. The weight average molecular weight (Mw) of the acrylic polymer (A) is, for example, within a range of 30000 to 5000000.

(Fine Particle)

In the present embodiment, fine particles (B) can be added to the acrylic polymer (A) that forms the core layer. The fine particle (B) has operational effects of improving the shear adhesive force and processability of the acrylic pressure-sensitive adhesive tape or sheet made of the acrylic pressure-sensitive adhesive.

Examples of the fine particle (B) include: metallic particles made of copper, nickel, aluminum, chromium, iron, and stainless steel, etc., and metal oxide particles made of them; carbide particles made of silicon carbide, boron carbide, and carbon nitride, etc. ; nitride particles made of aluminum nitride, silicon nitride, and boron nitride, etc.; glass particles; ceramic particles represented by oxides, such as alumina and zirconium, etc. ; inorganic fine particles made of calcium carbide, aluminum hydroxide, glass, and silica, etc.; natural material particles, such as volcanic Shirasu and sand, etc.; polymer particles made of polystyrene, polymethyl methacrylate, phenol resin, benzoguanamine resin, urea resin, silicone resin, nylon, polyester, polyurethane, polyethylene, polypropylene, polyamide, and polyimide, etc.; organic hollow bodies made of vinylidene chloride, and acrylic, etc. ; organic spheres, such as nylon bead, acrylic bead, and silicone bead; and the like.

Hollow fine particles can be preferably used as the fine particle (B). Among the hollow fine particles, a hollow inorganic fine particle can be preferably used from the viewpoints of an efficiency of the polymerization using an ultraviolet reaction and weight. Examples of the hollow inorganic fine particle include: glass balloons, such as a hollow glass balloon (also referred to as a hollow glass microsphere) ; hollow balloons made of metallic compounds, such as a hollow aluminum balloon; hollow balloons made of porcelain, such as a hollow ceramic balloon; and the like. High-temperature adhesive force can be improved by using the aforementioned hollow glass balloons, without impairing other properties, such as

shear force and holding force.

Examples of the hollow glass balloon (hollow glass microsphere) include, for example, the products: with the name of "Glass Microballoon" (made by FUJI SILYSIA CHEMICAL, Ltd.); with the names of "CEL-STAR Z-20", "CEL-STAR Z-27", "CEL-STAR CZ-31T", "CEL-STAR Z-36", "CEL-STAR Z-39","CEL-STAR T-36", and "CEL-STAR PZ-6000" (all of which are made by Tokai Kogyo Co., Ltd.); with the name of "SILUX FINE BALLOON" (made by FINE-BALLOON Ltd.); and the like.

The size (average particle size) of the fine particle (B) is not particularly limited, but can be selected from a range of, for example, 1 to 500 μm, preferably from a range of 5 to 200 μm, and more preferably from a range of 10 to 150 μm.

The specific gravity of the fine particle (B) is not particularly limited, but can be selected from a range of, for example, 0.1 to 1.8 g/cm$^3$, preferably from a range of 0.2 to 1.5 g/cm$^3$, and more preferably from a range of 0.2 to 0.5 g/cm$^3$.

If the specific gravity of the fine particle (B) is smaller than 0.1g/cm$^3$, floating of the fine particles (B) becomes large when the fine particles are combined into the acrylic pressure-sensitive adhesive and they are mixed, and hence it may be difficult to uniformly scatter the fine particles. Additionally, because the strength of the glass becomes low, it will easily crack. Conversely, if the specific gravity thereof is larger than 1.8 g/cm$^3$, the transmission rate of an ultraviolet ray is decreased, and hence there is the fear that the efficiency of the ultraviolet reaction may be decreased. Additionally, the acrylic pressure-sensitive adhesive becomes heavy and workability is deteriorated.

The use amount of the fine particles (B) is not particularly limited, but if it is, for example, less than 10% by volume, based on the whole volume of the core layer, the effects of adding the fine particles become low; on the other hand, if it is more than 50% by volume, the adhesive force is decreased.

(Bubble)

In the present embodiment, the bubbles (C) can be added to the acrylic polymer (A) that forms the core layer. By containing the bubbles (C) in the core layer, the acrylic pressure-sensitive adhesive (acrylic pressure-sensitive adhesive tape) can exhibit good adhesiveness to a curved surface and concave-convex surface, and also exhibit good resistance to resilience.

It is desirable that the bubbles (C) contained in the core layer are basically closed-cell type bubbles, but closed-cell type bubbles and interconnected-cell type bubbles may coexist.

Although the bubble (C) usually has a spherical shape (in particular, a true spherical shape), the shape does not necessarily have to be a true spherical shape, and there may be concavities and convexities on the surface of a spherical shape. The average bubble size (diameter) of the bubble (C) is not particularly limited, but can be selected, for example, from a range of 1 to 1000 μm, preferably from a range of 10 to 500 μm, and more preferably from a range of 30 to 300 μm.

A gas component contained in the bubble (C) (gas component that forms the bubble (C); hereinafter, sometimes referred to as bubble-forming gas) is not particularly limited, but various gas components, such as inactive gases including nitrogen, carbon dioxide, and argon, and air, can be used. When a polymerization reaction is performed in a state where a bubble-forming gas is contained, it is important that the gas that forms the bubble does not hamper the reaction. Nitrogen can be preferably used as the bubble-forming gas in terms of not hampering the polymerization reaction and cost.

The amount of the bubbles (C) contained in the core layer is not particularly limited, but can be appropriately selected in accordance with the application and use of the tape, etc. The amount thereof is, for example, 5 to 50% by volume, and preferably 8 to 40% by volume, based on the whole volume of the core layer containing the bubbles. If the mixing amount of the bubbles is less than 5% by volume, the effects of mixing the bubbles cannot be obtained. Conversely, if the mixing amount is more than 50% by volume, the bubbles each penetrating the core layer are present, and hence the adhesive performance or the appearance is decreased.

In the core layer containing the bubbles (C), the form in which the bubble is formed is not particularly limited. As the core layer containing the bubbles, a core layer in which bubbles are formed can be formed, for example: (1) by using a core layer in which a gas component that forms the bubble (bubble-forming gas) is mixed beforehand; or (2) by mixing a foaming agent in the core layer. In the case of the aforementioned method of (2) where a core layer in which bubbles are formed is formed by using a core layer containing a foaming agent, the foaming agent is not particularly limited, but for example, can be appropriately selected from publicly-known foaming agents. As the foaming agent, for example, a heat-expandable microsphere, etc., can be used.

(Other Components)

Other than the aforementioned components, a thickener, thixotropic agent, and filler, etc. , may be added to the core layer, if necessary. Examples of the thickener include acrylic rubber, epichlorohydrin rubber, and butyl rubber, etc. Examples of the thixotropic agent include colloid silica and polyvinylpyrrolidone, etc. Examples of the filler include

calcium carbonate, titanium oxide, and clay, etc. Other than these, a plasticizer, anti-aging agent, and antioxidant, etc., may be appropriately added thereto. Additives to be added should not be limited thereto.

(Surface Layer)

The components of the surface layer 18 include: as a pressure-sensitive adhesive composition, an acrylic polymer (D) ; and as a tackifying resin, a (meth)acrylic polymer (E) having a weight average molecular weight ($M_{WE}$) of $1000 \leq M_{WE} < 30000$. The acrylic polymer (D) to be used in the surface layer 18 can be selected from the compounds (various monomer components) exemplifying the acrylic polymer (A) in the core layer 16. The acrylic polymer (D) to be used in the surface layer 18 may or may not have the same components and composition ratios as those of the acrylic polymer (A) in the core layer 16. The acrylic polymer (D) can be prepared by using the same polymerization initiator and polymerization method as those of the acrylic polymer (A) that forms the core layer. Hereinafter, the (meth) acrylic polymer (E) will be described in detail.

[(Meth)Acrylic Polymer (E)]

The (meth) acrylic polymer (E) is a polymer having a weight average molecular weight smaller than that of the acrylic polymer (D), and functions as a tackifying resin and has the advantage that inhibition of polymerization is hardly caused when UV polymerization is performed. By blending the (meth)acrylic polymer (E) in the pressure-sensitive adhesive composition that forms the surface layer, the adhesiveness of the acrylic pressure-sensitive adhesive tape to an adherend having low polarity, which is made of polyethylene, polypropylene, or the like, can be remarkably improved. For example, the (meth) acrylic polymer (E) contains, as a monomer unit, a (meth)acrylic acid ester.

Examples of such a (meth) acrylic acid ester include: (meth)acrylic acid alkyl esters, such as (meth)acrylic acid methyl, (meth)acrylic acid ethyl, (meth)acrylic acid propyl, (meth)acrylic acid isopropyl, (meth)acrylic acid butyl, (meth)acrylic acid isobutyl, (meth)acrylic acid s-butyl, (meth)acrylic acid t-butyl, (meth)acrylic acid pentyl, (meth)acrylic acid isopentyl, (meth)acrylic acid hexyl, (meth)acrylic acid-2-ethylhexyl, (meth)acrylic acid heptyl, (meth)acrylic acid octyl, (meth)acrylic acid isooctyl, (meth)acrylic acid nonyl, (meth)acrylic acid isononyl, (meth)acrylic acid decyl, (meth)acrylic acid isodecyl, (meth)acrylic acid undecyl, and (meth)acrylic acid dodecyl; esters of (meth)acrylic acids with alicyclic alcohols, such as (meth)acrylic acid cyclohexyl and (meth)acrylic acid isobornyl; (meth) acrylic acid aryl esters, such as (meth) acrylic acid phenyl and (meth) acrylic acid benzyl; (meth) acrylic acid esters obtained from terpene compound derivative alcohols; and the like. These (meth)acrylic acid esters can be used alone or in combination.

Alternatively, the (meth)acrylic polymer (E) can also be obtained by copolymerizing another monomer component (copolymerizable monomer) that is copolymerizable with the (meth)acrylic acid ester, in addition to the (meth)acrylic acid ester component unit.

Examples of the another monomer that is copolymerizable with the (meth)acrylic acid ester include: (meth)acrylic acid alkoxy alkyl monomers, such as (meth)acrylic acid methoxyethyl, (meth)acrylic acid ethoxyethyl, (meth)acrylic acid propoxyethyl, (meth)acrylic acid butoxyethyl, and (meth)acrylic acid ethoxypropyl; salts, such as (meth)acrylic acid alkali metal salt; di(meth)acrylic acid ester monomers of (poly)alkylene glycols, such as di(meth)acrylic acid ester of ethylene glycol, di (meth) acrylic acid ester of diethylene glycol, di(meth)acrylic acid ester of triethylene glycol, di(meth)acrylic acid ester of polyethylene glycol, di (meth) acrylic acid ester of propylene glycol, di (meth) acrylic acid ester of dipropylene glycol, and di (meth) acrylic acid ester of tripropylene glycol; poly(meth)acrylic acid ester monomers, such as trimethylolpropane tri(meth)acrylic acid ester; vinyl esters, such as vinyl acetate and vinyl propionate; halogenated vinyl compounds, such as vinylidene chloride and (meth)acrylic acid-2-chloroethyl; oxazoline group-containing polymerizable compounds, such as 2-vinyl-2-oxazoline, 2-vinyl-5-methyl-2-oxazoline, and 2-isopropenyl-2-oxazoline; aziridine group-containing polymerizable compounds, such as (meth)acryloylaziridine and (meth)acrylic acid-2-aziridinylethyl; epoxy group-containing vinyl monomers, such as allyl glycidyl ether, (meth) acrylic acid glycidyl ether, and (meth)acrylic acid-2-ethyl glycidyl ether; hydroxyl group-containing vinyl monomers, such as (meth)acrylic acid-2-hydroxyethyl, (meth)acrylic acid-2-hydroxypropyl, monoesters of (meth)acrylic acids with polypropylene glycol or polyethylene glycol, and adducts of lactones with (meth)acrylic acid-2-hydroxyethyl; fluorine-containing vinyl monomers, such as fluorine-substituted (meth)acrylic acid alkyl ester; acid anhydride group-containing monomers, such as maleic acid anhydride and itaconic acid anhydride; aromatic vinyl compound monomers, such as styrene, α-methylstyrene, and vinyl toluene; reactive halogen-containing vinyl monomers, such as 2-chloroethyl vinyl ether and monochloro vinyl acetate; amide group-containing vinyl monomers, such as (meth) acrylamide, N-isopropyl(meth)acrylamide, N-butyl(meth)acrylamide, N,N-diethyl(meth)acrylamide, N,N-dimethyl(meth)acrylamide, N-methylol(meth)acrylamide, N-ethylol(meth)acrylamide, N-methylolpropane(meth)acrylamide, N-methoxyethyl(meth)acrylamide, N-butoxymethyl(meth)acrylamide, and N-acryloyl morpholine; succinimide monomers, such as N-(meth)acryloyloxy methylene succinimide, N-(meth)acryloyl-6-oxy hexamethylene succinimide, and N-(meth)acryloyl-8-oxy hexamethylene succinimide; maleimide monomers, such as N-cyclohexyl maleimide, N-isopropylmaleimide, N-lauryl maleimide, and N-phenyl maleimide; itaconimide monomers, such

as N-methylitaconimide, N-ethylitaconimide, N-butylitaconimide, N-octylitaconimide, N-2-ethylhexylitaconimide, N-cyclohexylitaconimide, and N-laurylitaconimide; nitrogen-containing heterocyclic monomers, such as N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-(meth)acryloyl-2-pyrrolidone, N-(meth)acryloylpiperidine, N-(meth)acryloylpyrrolidine, N-vinyl morpholine, N-vinyl pyrazole, N-vinyl isoxazole, N-vinyl thiazole, N-vinyl isothiazole, and N-vinyl pyridazine; N-vinyl carboxylic acid amides; lactam monomers, such as N-vinyl caprolactam; cyanoacrylate monomers, such as (meth)acrylonitrile; (meth)acrylic acid aminoalkyl monomers, such as (meth)acrylic acid aminoethyl, (meth)acrylic acid N,N-dimethylaminoethyl, (meth)acrylic acid N,N-dimethylaminoethyl, and (meth)acrylic acid t-butylaminoethyl; imide group-containing monomers, such as cyclohexyl maleimide and isopropyl maleimide; isocyanate group-containing monomers, such as 2-isocyanate ethyl (meth) acrylate; organic silicon-containing vinyl monomers, such as vinyltrimethoxysilane, γ-methacryloxpropyl trimethoxy silane, allyltrimethoxysilane, trimethoxysilylpropylallylamine, and 2-methoxy ethoxy trimethoxy silane; hydroxyl group-containing monomers, such as (meth)acrylic acid hydroxyalkyls including (meth)acrylic acid hydroxyethyl, (meth)acrylic acid hydroxypropyl, (meth)acrylic acid hydroxybutyl, (meth)acrylic acid hydroxyhexyl, (meth)acrylic acid hydroxyoctyl, (meth)acrylic acid hydroxydecyl, (meth)acrylic acid hydroxy lauryl, and (4-hydroxymethyl cyclohexyl)methyl methacrylate; acrylic acid ester monomers having a heterocycle, halogen atom, silicon atom, or the like, such as (meth)acrylic acid tetrahydrofurfuryl, fluorine atom-containing (meth)acrylate, and silicone(meth)acrylate; olefin monomers, such as isoprene, butadiene, and isobutylene; vinyl ether monomers, such as methyl vinyl ether and ethyl vinyl ether; olefins or dienes, such as ethylene, butadiene, isoprene, and isobutylene; vinyl ethers, such as vinyl alkyl ether; vinyl chloride; and others, such as macromonomers having a radically polymerizable vinyl group at the monomer end to which a vinyl group has been polymerized; and the like. These monomers can be copolymerized, alone or in combination thereof, with the (meth)acrylic acid esters.

In the acrylic pressure-sensitive adhesive composition of the present embodiment, examples of the (meth)acrylic polymer (E) include, for example: a copolymer of cyclohexyl methacrylate (CHMA) and isobutyl methacrylate (IBMA), that of cyclohexyl methacrylate (CHMA) and isobornyl methacrylate (IBXMA), that of cyclohexyl methacrylate (CHMA) and acryloyl morpholine (ACMO), that of cyclohexyl methacrylate (CHMA) and diethylacrylamide (DEAA), that of dicyclopentanyl methacrylate (DCPMA) and isobornyl methacrylate (IBXMA), homopolymer of dicyclopentanyl methacrylate (DCPMA), that of cyclohexyl methacrylate (CHMA), that of isobornyl methacrylate (IBXMA), that of isobornyl acrylate (IBXA), that of dicyclopentanyl acrylate (DCPA), that of 1-adamantyl methacrylate (ADMA), and that of 1-adamantyl acrylate (ADA), etc.

It is preferable that the (meth) acrylic polymer (E) contains, as a monomer unit, an acrylic monomer having a relatively bulky structure, represented by: (meth) acrylate whose alkyl group has a branched structure, such as t-butyl(meth)acrylate; ester of (meth)acrylic acid with alicyclic alcohol, such as cyclohexyl(meth)acrylate and (meth) acrylic acid isobornyl; and (meth) acrylate having a cyclic structure, such as (meth)acrylic acid aryl ester including (meth)acrylic acid phenyl and (meth)acrylic acid benzyl. By making the (meth) acrylic polymer (E) have such a bulky structure, the adhesiveness of the acrylic pressure-sensitive adhesive tape can be further improved. A monomer having a cyclic structure has a large effect in terms of bulkiness, and a monomer containing multiple rings further has a larger effect. In addition, when UV polymerization is adopted in synthesizing the (meth)acrylic polymer (E) or in producing the pressure-sensitive adhesive composition, it is preferable to use a monomer having a saturated bond, in terms that inhibition of polymerization is hardly caused. In that case, (meth)acrylate whose alkyl group has a branched structure, or an ester thereof with an alicyclic alcohol can be preferably used as a monomer that forms the (meth) acrylic polymer (E).

The (meth)acrylic polymer (E) may further contain, as a monomer unit, a (meth)acrylic monomer having, for example, an alicyclic structure of three or more rings. By making the (meth)acrylic polymer (E) have such a bulky structure as the alicyclic structure of three or more rings, the adhesiveness of the acrylic pressure-sensitive adhesive tape can be further improved. In particular, the adhesiveness to an adherend having low polarity made of polyethylene, polypropylene, or the like, can be improved more remarkably. The (meth)acrylic polymer (E) may be a homopolymer of the (meth)acrylic monomer having an alicyclic structure of three or more rings, or may be a copolymer between the (meth) acrylic monomer having an alicyclic structure of three or more rings and the (meth) acrylic acid ester monomer or copolymerizable monomer.

The (meth)acrylic monomer is a (meth)acrylic acid ester represented by, for example, the following general formula (1):

$$CH_2 = C(R^4)COOR^5 \qquad (1)$$

[wherein, $R^4$ represents a hydrogen atom or a methyl group and $R^5$ an alicyclic hydrocarbon group having an alicyclic structure of three or more rings.]

It is preferable that the alicyclic hydrocarbon group has a three-dimensional structure, such as a bridged ring structure. By making the (meth)acrylic polymer (E) have an alicyclic structure of three or more rings that has a bridged ring structure, as stated above, the adhesiveness of the acrylic pressure-sensitive adhesive tape can be further improved.

In particular, the adhesiveness to an adherend having low polarity made of polyethylene, polypropylene, or the like, can be improved more remarkably. Further, resistance to resilience and a holding property can be both satisfied. That is, by making the (meth)acrylic polymer (E) have an alicyclic structure of three or more rings that has a bridged ring structure, an acrylic pressure-sensitive adhesive tape can be obtained, in which pressure-sensitive adhesive force, resistance to resilience, and a holding property are combined at a high level. Examples of the alicyclic hydrocarbon group having a bridged ring structure include, for example: a dicyclopentanyl group represented by the following formula (2a); a dicyclopentenyl group represented by the following formula (2b) ; an adamantyl group represented by the following formula (2c); a tricyclopentanyl group represented by the following formula (2d); and a tricyclopentenyl group represented by the following formula (2e), etc. When UV polymerization is adopted in synthesizing the (meth)acrylic polymer (E) or in producing the pressure-sensitive adhesive composition, a (meth) acrylic monomer having a saturated structure, such as the dicyclopentanyl group represented by the following formula (2a), the adamantyl group represented by the following formula (2c), the tricyclopentanyl group represented by the following formula (2d), or the like, of the (meth) acrylic monomers having an alicyclic structure of three or more rings that has a bridged ring structure, can be particularly and preferably used as a monomer for forming the (meth) acrylic polymer (B), from the viewpoint of hardly causing inhibition of polymerization.

[Chemical Formula 1]

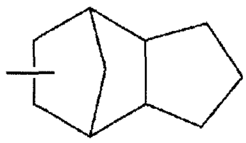

(2a)

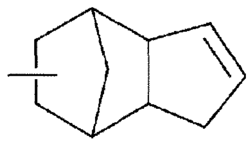

(2b)

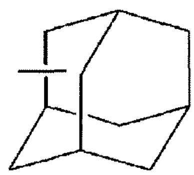

(2c)

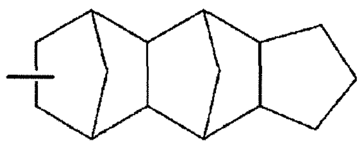

(2d)

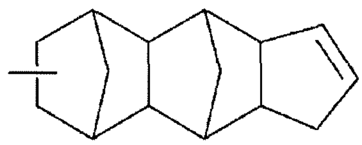

(2e)

Examples of such a (meth)acrylic monomer having an alicyclic structure of three or more rings that has a bridged ring structure include (meth)acrylic acid esters, such as dicyclopentanyl methacrylate, dicyclopentanyl acrylate, dicyclopentanyl oxyethyl methacrylate, dicyclopentanyl oxyethyl acrylate, tricyclopentanyl methacrylate, tricyclopentanyl acrylate, 1-adamantyl methacrylate, 1-adamantyl acrylate, 2-methyl-2-adamantyl methacrylate, 2-methyl-2-adamantyl acrylate, 2-ethyl-2-adamantyl methacrylate, and 2-ethyl-2-adamantyl acrylate. These (meth) acrylic monomers can be used alone or in combination of two or more thereof.

A functional group reactive with an epoxy group or an isocyanate group may be further introduced into the (meth) acrylic polymer (E). Examples of such a functional group include a hydroxyl group, carboxyl group, amino group, amide group, and a mercapto group. When the (meth)acrylic polymer (E) is produced, it is preferable to use a monomer having such a functional group.

The weight average molecular weight ($M_{wE}$) of the (meth) acrylic polymer (E) is $1000 \leq M_{WE} < 30000$, preferably $1500 \leq M_{WE} < 20000$, and more preferably $2000 \leq M_{WE} < 10000$. If $30000 \leq M_{WE}$, the effect of improving the pressure-sensitive adhesive force of a pressure-sensitive adhesive tape may not be sufficiently obtained. Conversely, if $M_{WE} < 1000$, the molecular weight is too small, and hence the pressure-sensitive adhesive force or holding property of a pressure-sensitive adhesive tape may be decreased.

A weight average molecular weight can be determined by polystyrene conversion with the use of a GPC method. Specifically, a weight average molecular weight can be measured by using HPLC8020 made by TOSOH CORPORATION and two TSKgelGMH-H (20) columns, and under conditions in which a tetrahydrofuran solvent is used and a flow rate

is approximately 0.5 ml/min.

The content of the acrylic oligomer (E) is preferably within a range of 2 to 70 parts by mass, and more preferably within a range of 5 to 50 parts by mass, based on 100 parts by mass of the acrylic polymer (D). If the (meth)acrylic polymer (E) is added in an amount more than 70 parts by mass, the elastic modulus of a pressure-sensitive adhesive layer formed of the acrylic pressure-sensitive adhesive composition according to the present embodiment becomes large, and hence the adhesiveness at a low-temperature may be deteriorated or the pressure-sensitive adhesive force may not be exerted even at room temperature. Conversely, if the content is less than 2 parts by mass, the effect of adding the (meth)acrylic polymer (E) may not be obtained.

The glass transition temperature (Tg) of the (meth)acrylic polymer (E) is approximately 20°C ≤ Tug ≤ 300°C, preferably approximately 30°C ≤ Tg ≤ 300°C, and more preferably approximately 40°C ≤ Tg ≤ 300°C. If Tg is lower than approximately 20°C, the cohesive force of a pressure-sensitive adhesive layer is decreased at room temperature or higher, and hence the holding property and the adhesiveness at high-temperature may be decreased. In the present embodiment, the glass transition temperatures of typical materials that can be used as the (meth)acrylic polymer (E) are shown in Table 1. The glass transition temperatures shown there are nominal values described in documents or catalogs, etc. , or values calculated based on the following Equation (3) (Fox Equation):

$$1/Tg = W1/Tg1 + W2/Tg2 + \cdots + Wn/Tgn \quad (3)$$

[wherein Tg represents the glass transition temperature (unit: K) of the (meth) acrylic polymer (E), Tgi (i= 1, 2, ···, n) represents the glass transition temperature (unit: K) when monomer i forms a homopolymer, and Wi (i= 1, 2,···, n) represents a mass fraction of the monomer i in the whole monomer components.] The above Equation (3) is adopted when the (meth)acrylic polymer (E) is formed of n types of monomer components of monomer 1, monomer 2,···, monomer n.

[Table 1]

| COMPOSITION OF (METH) ACRYLIC POLYMER (E) | Tg(°C) | REMARKS |
|---|---|---|
| DCPMA | 175 | VALUES DESCRIBED IN DOCUMENTS. ETC. |
| DCPA | 120 | VALUES DESCRIBED IN DOCUMENTS, ETC. |
| IBXMA | 173 | VALUES DESCRIBED IN DOCUMENTS, ETC. |
| IBXA | 97 | VALUES DESCRIBED IN DOCUMENTS, ETC. |
| CHMA | 66 | VALUES DESCRIBED IN DOCUMENTS. ETC. |
| MMA | 105 | VALUES DESCRIBED IN DOCUMENTS, ETC. |
| ADMA | 250 | VALUES DESCRIBED IN DOCUMENTS. ETC. |
| ADA | 153 | VALUES DESCRIBED IN DOCUMENTS. ETC. |
| DCPMA/IBXMA40 | 174 | CALCULATED VALUES (BASED ON Fox EQUATION) |
| DCPMA/MMA40 | 144 | CALCULATED VALUES (BASED ON Fox EQUATION) |
| DCPMA/MMA60 | 130 | CALCULATED VALUES (BASED ON Fox EQUATION) |
| IBXMA/MMA60 | 130 | CALCULATED VALUES (BASED ON Fox EQUATION) |
| ADMA/MMA40 | 180 | CALCULATED VALUES (BASED ON Fox EQUATION) |
| ADA/MMA40 | 132 | CALCULATED VALUES (BASED ON Fox EQUATION) |
| CHMA/IBMA40 | 51 | CALCULATED VALUES (BASED ON Fox EQUATION) |

The abbreviations in Table 1 represent the following compounds.
DCPMA: Dicyclopentanyl Methacrylate
DCPA: Dicyclopentanyl Acrylate
IBXMA: Isobornyl Methacrylate
IBXA: Isobornyl Acrylate
CHMA: Cyclohexyl Methacrylate
MMA: Methyl Methacrylate
ADMA: 1-Adamantyl Methacrylate
ADA: 1-Adamantyl Acrylate
DCPMA/IBXMA 40: Copolymer of 60 parts by mass of DCPMA and 40 parts by mass of IBXMA
DCPMA/MMA 40: Copolymer of 60 parts by mass of DCPMA and 40 parts by mass of MMA
DCPMA/MMA 60: Copolymer of 40 parts by mass of DCPMA and 60 parts by mass of MMA
IBXMA/MMA 60: Copolymer of 40 parts by mass of IBXMA and 60 parts by mass of MMA
ADMA/MMA 40: Copolymer of 60 parts by mass of ADMA and 40 parts by mass of MMA
ADA/MMA 40: Copolymer of 60 parts by mass of ADA and 40 parts by mass of MMA
CHMA/IBMA 40: Copolymer of 60 parts by mass of CHMA and 40 parts by mass of IBMA

<Method of Producing (Meth)Acrylic Polymer (E)>

The (meth) acrylic polymer (E) can be produced, for example, by polymerizing the (meth)acrylic monomer having the aforementioned structure with the use of a solution polymerization method, bulk polymerization method, emulsion polymerization method, suspension polymerization method, block polymerization method, or the like.

<Method of Adjusting Molecular Weight of (Meth)Acrylic Polymer (E) >

In order to adjust the molecular weight of the (meth) acrylic polymer (E), a chain transfer agent can be used while the polymer (E) is being polymerized. Examples of the chain transfer agent to be used include: compounds having a mercapt group, such as octylmercaptan, t-nonyl mercaptan, dodecyl mercaptan, t-dodecyl mercaptan, mercaptoethanol, and α-thioglycerol; thioglycolic acid, methyl thioglycolate, ethyl thioglycolate, propyl thioglycolate, butyl thioglycolate, t-butyl thioglycolate, 2-ethylhexyl thioglycolate, octyl thioglycolate, isooctyl thioglycolate, decyl thioglycolate, dodecyl thioglycolate, thioglycolic acid ester of ethylene glycol, thioglycolic acid ester of neopentyl glycol, and thioglycolic acid ester of pentaerythritol. Examples of the particularly preferred chain transfer agent, from the viewpoint of metal corrosiveness, include α-thioglycerol, mercaptoethanol, methyl thioglycolate, ethyl thioglycolate, propyl thioglycolate, butyl thioglycolate, t-butyl thioglycolate, 2-ethylhexyl thioglycolate, octyl thioglycolat, and isooctyl thioglycolate.
The use amount of the chain transfer agent is not particularly limited, but the chain transfer agent is usually contained in an amount within a range of approximately 0.1 to approximately 20 parts by mass, preferably within a range of approximately 0.2 to approximately 15 parts by mass, and more preferably within a range of approximately 0.3 to approximately 10 parts by mass, based on 100 parts by mass of the (meth) acrylic monomer. By adjusting the use amount of the chain transfer agent, as stated above, the (meth) acrylic polymer (E) having a preferred molecular weight can be obtained. The chain transfer agents can be used alone or in combination of two or more thereof.
The weight average molecular weights of the acrylic polymers (A) and (D) and the (meth)acrylic polymer (E) can be determined by polystyrene conversion with the use of a GPC method. Specifically, the weight average molecular weights can be measured by using HPLC 8020 made by TOSOH CORPORATION and two TSKgelGMH-H (20) columns, and under conditions in which a tetrahydrofuran solvent is used and a flow rate is 0.5 ml/min.

(Thickness of Pressure-Sensitive Adhesive Layer)

In the present invention, the thickness of the pressure-sensitive adhesive layer (when the core layer and the surface layer are present, the total thickness thereof) is 0.2 to 2.0 mm, and preferably 0.6 to 2.0 mm.

(Layer Thickness Ratio)

The ratio of the thickness of the surface layer 18a (or surface layer 18b) to the total thickness of both the thickness of the core layer 16 and that of the surface layer 18a (or surface layer 18b) is preferably approximately 3 to approximately 70%. If the ratio is less than approximately 3%, desired adhesiveness may not be obtained. On the other hand, if the ratio is more than 70%, the effects that can be expected when a pressure-sensitive adhesive tape has the core layer 16 containing the bubble (C), such as a stress relaxation property and level difference absorbing property, may not be obtained.

(Method of Forming Multi-Layers)

A method of laminating the core layer 16 and the surface layer 18 is not particularly limited, but for example, the methods described below can be applied.

(1) A method of forming multi-layers in which, after the core layer 16 and the surface layer 18 are cured separately, the surface layer 18a is laminated on one surface of the core layer 16 and the surface layer 18b on the other surface of the core layer 16: this method has the advantage that the accuracy of each layer thickness can be enhanced.
(2) A method in which, after the core layer 16 is coated on the surface layer 18a (or surface layer 18b) that has been cured beforehand, the core layer 16 is cured, and subsequently the surface layer 18b (or surface layer 18a) is coated on the core layer 16, and then the surface layer 18b (or surface layer 18a) is cured, or a method in which, after the surface layer 18a is coated on one surface (or surface layer 18b is coated on the other surface) of the core layer 16 that has been cured beforehand, the surface layer 18a (or surface layer 18b) is cured, and subsequently the surface layer 18b is coated on the other surface (or surface layer 18a is coated on the one surface) of the core layer 16, and then the surface layer 18b (or surface layer 18a) is cured: in this method, because one layer is coated on another layer that has been cured, the accuracy of each layer thickness can be enhanced. Further, because layers can be collectively coated on another layer that has been cured, production steps can be simplified and a production time can be shortened.
(3) A method in which, after the core layer 16 (or surface layer 18) is sequentially or simultaneously coated on the coated surface layer 18 (or core layer 16), they are cured: in this method, both the surface layer 18 and the core layer 16 can be collectively coated.

For the formation of each layer, a coating roll, such as a roll coater or comma coater, may be used, or a slot die may be used. In particular, in the aforementioned method (3), a multi-layer slot die for coating each layer may also be used.
According to the aforementioned acrylic pressure-sensitive adhesive tape, the adhesive force to adherends having low polarity, such as polystyrene, ABS, and polycarbonate, can be improved by including a multilayer structure in which the surface layer containing the acrylic polymer and the (meth)acrylic polymer (E) and the core layer are laminated each other.
In the acrylic pressure-sensitive adhesive tape of the aforementioned embodiment, the surface layers are provided on both the sides of the core layer, but the surface layer may be provided on one side of the core layer.

[Pressure-Sensitive Adhesive Tape]

The pressure-sensitive adhesive tape according to the present embodiment includes: a pressure-sensitive adhesive layer (12 in Fig. 1) that contains a fine particle and/or a bubble and both the surfaces of which are pressure-sensitive adhesive surfaces; and a release liner having both a release layer (a) (first release layer 28 in Fig. 3) that is provided on one surface (1) (12a in Fig. 1) of the pressure-sensitive adhesive layer so as to contact the one surface (1) and a back surface release layer (b) (second release layer 30 in Fig. 3) located opposite to the release layer (a).
Because the pressure-sensitive adhesive tape according to the present embodiment has the aforementioned structure, the following structure is formed when the pressure-sensitive adhesive tape is wound into a roll shape (or when a plurality of the sheet-shaped pressure-sensitive adhesive tapes are laminated each other), in which the other surface of the pressure-sensitive adhesive layer contacts the back surface release layer (b) (second release layer 30 in Fig. 3) in a peelable manner.
In the pressure-sensitive adhesive tape according to the present embodiment, a holding time during which the pressure-sensitive adhesive layer and the back surface release layer (b) of the release liner are held together, the holding time being measured according to the later-described measuring method, is 2500 minutes or longer, preferably 3000 minutes or longer, and most preferably 3300 minutes or longer. By making the holding time 2500 minutes or longer, oozing of the pressure-sensitive adhesive (paste oozing) from the side surface can be suppressed in the pressure-sensitive adhesive tape wound into a roll shape.
In the present embodiment, it is particularly preferable that the release liner has the following structure, in order to adjust the holding time to be within the aforementioned range:

(1) a structure in which the release liner has: a base layer containing a polyolefin resin; and a release layer (a) that contains low-density polyethylene and is provided on at least one side of the base layer so as to contact the pressure-sensitive adhesive layer; or
(2) a structure in which the release liner has: a base layer containing a polyolefin resin; a release layer (a) that contains linear low-density polyethylene and is provided on one side of the base layer so as to contact the pressure-sensitive adhesive layer; and a back surface release layer (b) that contains linear low-density polyethylene and is provided on the other side of the base layer.

When the pressure-sensitive adhesive layer is formed to have a multilayer structure including: a core layer that contains the acrylic polymer (A), the fine particle (B) and/or the bubble (C); and a surface layer that is provided on one or both sides of the core layer and contains the acrylic polymer (D) and the (meth)acrylic polymer (E) having a weight average molecular weight ($M_{WE}$) of $1000 \leq M_{WE} < 30000$, oozing of the pressure-sensitive adhesive (paste oozing) from the side surface can be remarkably suppressed in the pressure-sensitive adhesive tape wound into a roll shape.

In the pressure-sensitive adhesive tape according to the present embodiment, the peeling force, occurring when the release liner is peeled from the pressure-sensitive adhesive layer in a 180°-peeling direction, at a tensile speed of 300 mm/min, and in an environment of an ambient temperature of 23°C, is 1.0 [N/25 mm] or more, and preferably 1.2 [N/25 mm] or more (the upper limit is 5 [N/25 mm]). By making the peeling force 1.0 [N/25 mm] or more, oozing of the pressure-sensitive adhesive (paste oozing) from the side surface can be suppressed in the pressure-sensitive adhesive tape wound into a roll shape. Herein, the peeling force refers to one between the pressure-sensitive adhesive layer and the back surface release layer (b) of the release liner.

In a pressure-sensitive adhesive sheet with the release liner according to the present embodiment, pop-off or peeling of the release liner is not caused even when stored in a curved state, and the sheet can exhibit an excellent peeling function when in use. Further, oozing of the pressure-sensitive adhesive from the pressure-sensitive adhesive tape wound into a roll shape can be suppressed. Accordingly, in the pressure-sensitive adhesive tape according to the present embodiment, blocking can be prevented from occurring in the state of being wound into a roll shape, and hence the tape can be stored for a long period of time in the state.

Examples

Hereinafter, the present embodiment will be described in more detail based on Examples, but the present invention should not be limited at all by these Examples. In the following Examples, Comparative Example, and Table 2, the surface layer to be attached to a pressure-sensitive adhesive tape is referred to as a "surface layer (pressure-sensitive adhesive layer side)" and the surface layer located opposite thereto is referred to as a "surface layer (back surface side)".

[Example 1]

(Release Liner)

As the material of the surface layer (pressure-sensitive adhesive layer side), a low-density polyethylene resin (product name: "Novatec LD UF641" made by JAPAN POLYETHYLENE CORPORATION, density: 927 kg/$m^3$) was used. As the material of each of the base layer and the surface layer (back surface side), a mixed material (mixing mass ratio of the following high-density polyethylene/low-density polyethylene: 60/40) was used, in which the high-density polyethylene was a resin (product name: "HI-ZEX 3300F" made by Prime Polymer Co. Ltd., density: 950 kg/$m^3$) and the low-density polyethylene was a resin (product name: "Novatec LD LF440HB" made by JAPAN POLYETHYLENE CORPORATION, density: 925 kg/$m^3$).

A release liner (thickness: 149 μm), formed by a three-layered structure (surface layer (pressure-sensitive adhesive layer side) /base layer/surface layer (back surface side) (thickness: 21 μm/64 μm/64 μm), was produced by a three-layer co-extrusion T-die molding method, with the use of a rubber textured roll as a touch roll on the pressure-sensitive adhesive sheet side and a metallic textured roll as a touch roll on the back surface side.

The surface roughness (Ra) (arithmetic mean roughness: Ra) of the surface layer (pressure-sensitive adhesive layer side) provided on one side of the obtained release liner was 0.10 μm, and that of the surface layer (back surface side) located opposite thereto was 0.20 μm.

(Pressure-Sensitive Adhesive Layer)

•Core Layer

After a photo-polymerization initiator (product name: "IRGACURE 651" made by Ciba Specialty Chemicals Corp., 0.05 parts by mass) and a photo-polymerization initiator (product name: "IRGACURE 184" made by Ciba Specialty Chemicals Corp., 0.05 parts by mass) were blended in a monomer mixture formed by 2-ethylhexyl acrylate (90 parts by mass) and an acrylic acid (10 parts by mass), the mixture was irradiated with ultraviolet rays before the viscosity thereof (BH viscometer, No. 5 rotor, 10 rpm, measurement temperature: 30°C) became 15 Pa·s, thereby allowing a composition

(acrylic polymer syrup 1) in which part of the monomer components were polymerized to be obtained.

After 1, 6-hexanediol diacrylate (0.08 parts by mass) and a photo-polymerization initiator (product name: "IRGACURE 651" made by Ciba Specialty Chemicals Corp., 0.04 parts by mass) were added to the acrylic polymer syrup 1 (100 parts by mass), a hollow glass microsphere (product name: "CEL-STAR Z-27" made by Tokai Kogyo Co., Ltd.) was added in an amount of 9.5 parts by mass based on the partially polymerized monomer syrup.

A precursor of a pressure-sensitive adhesive composition was prepared by adding a fluorochemical surfactant (product name: Surflon S-393 made by AGC SEIMI CHEMICAL CO., LTD.; an acrylic copolymer having a polyoxyethylene group and a fluorinated hydrocarbon group in its side chain; $M_w$ = 8300, 0.5 parts by mass) to the acrylic polymer syrup 1 to which the hollow glass microsphere had been added. In the precursor of a pressure-sensitive adhesive composition, the ratio of the volume of the hollow glass microsphere to the whole volume of the precursor thereof was approximately 23% by volume.

An acrylic pressure-sensitive adhesive composition 1 for the core layer was obtained by introducing the precursor of a pressure-sensitive adhesive composition between the teeth on a stator and the teeth on a rotor in an apparatus (which is provided with: the stator having many fine teeth on a disc with a through-hole at its center; and a rotor having teeth they are as fine as those on the stator and provided on a disc, the rotor facing the stator) and then by introducing nitrogen gas into the precursor thereof via the through-hole while rotating the rotor at high-speed, that is, by mixing bubbles into the precursor thereof. The bubbles were mixed such that the content thereof was approximately 20% by volume, based on the whole volume of the acrylic pressure-sensitive adhesive composition 1.

The acrylic pressure-sensitive adhesive composition 1 was applied on a surface of a polyester film (release liner made of polyester, one surface of which has been subjected to a peeling treatment, thickness: 38 μm), the surface being the peeling-treated surface, with a roll coater so as to have a thickness of 550 μm. Subsequently, a polyester release liner of the same type was attached to the other surface of the applied acrylic pressure-sensitive adhesive composition 1 such that the peeling-treated surface of the polyester release liner faced the other surface of the acrylic pressure-sensitive adhesive composition 1. Subsequently, both the sides of the aforementioned object were irradiated with UV rays by using a black light lamp having an illuminance of 5 $mW/cm^2$. Thus, a core layer formed by an acrylic pressure-sensitive adhesive layer having a thickness of 550 μm was obtained.

•Surface Layer

After a photo-polymerization initiator (product name: "IRGACURE 651" made by Ciba Specialty Chemicals Corp., 0. 07 parts by mass) and a photo-polymerization initiator (product name: "IRGACURE 184" made by Ciba Specialty Chemicals Corp., 0.07 parts by mass) were blended in a monomer mixture formed by 2-ethylhexyl acrylate (94 parts by mass) and an acrylic acid (6 parts by mass), the mixture was irradiated with UV rays before the viscosity thereof (BH viscometer, No. 5 rotor, 10 rpm, measurement temperature: 30°C) became 15 Pa·s, thereby allowing a partially polymerized composition (acrylic polymer syrup 2) to be obtained.

After cyclohexyl methacrylate (CHMA, 60 parts by mass), isobutyl methacrylate (IBMA, 40 parts by mass), and thioglycolic acid (4.0 parts by mass) were blended, dissolved oxygen was removed by blowing nitrogen gas thereinto. After the mixture was heated to 90°C, PERHEXYL O (made by NOF CORPORATION, 0. 005 parts by mass) and PERHEXYL D (made by NOF CORPORATION, 0.01 parts by mass) were mixed. After being further stirred at 90°C for 1 hour, the mixture was heated to 150°C in 1 hour and stirred at the temperature for 1 hour. Subsequently, the mixture was heated to 170°C in 1 hour and stirred at the temperature for 60 minutes.

The pressure under which the mixture was put was reduced at 170°C and the mixture was stirred for 1 hour to remove remaining monomers, thereby allowing the (meth)acrylic polymer (E) to be obtained. The weight average molecular weight of the obtained (meth)acrylic polymer (E) was 3700.

An acrylic pressure-sensitive adhesive composition 2 for surface layer was obtained by blending 2-isocyanatoethyl acrylate (0.08 parts by mass) and the (meth)acrylic polymer (E) thus obtained (20 parts by mass) in the aforementioned acrylic polymer syrup 2 (100 parts by mass).

The acrylic pressure-sensitive adhesive composition 2 was applied to a surface of a polyester film (release liner made of polyester, one surface of which has been subjected to a peeling treatment, thickness: 38 μm), the surface being the peeling-treated surface, with a roll coater so as to have a thickness of 50 μm. Subsequently, a polyester release liner of the same type was attached to the other surface of the applied acrylic pressure-sensitive adhesive composition 2 such that the peeling-treated surface of the polyester release liner faced the other surface of the acrylic pressure-sensitive adhesive composition 2. Subsequently, both the sides of the aforementioned object were irradiated with UV rays by using a black light lamp having an illuminance of 5 $mW/cm^2$. Thus, a surface layer formed by an acrylic pressure-sensitive adhesive layer having a thickness of 50 μm was obtained.

(Attachment of Surface Layer/Core Layer/Surface Layer)

A pressure-sensitive adhesive layer (having a three-layered structure (surface layer (50 μm)/core layer (550 μm) /surface layer (50 μm)) was produced by attaching the surface layers to both the surfaces of the core layer, the surface layers and the core layer being obtained in the above procedures. Herein, the core layer was a pressure-sensitive adhesive layer containing bubbles and fine particles.

A pressure-sensitive adhesive tape was produced by attaching the pressure-sensitive adhesive layer to the surface of the surface layer (pressure-sensitive adhesive layer side) of the aforementioned release liner and then by winding it into a roll shape.

[Example 2]

(Release Liner)

As the material of each of the surface layers (pressure-sensitive adhesive layer side, back surface side), a mixed material was used, the mixed material being made by 100 parts by mass of a linear low-density polyethylene resin (product name "MORETEC 0628D" made by Prime Polymer Co. Ltd. , density: 916 kg/$m^3$) and 15 parts by mass of an ethylene-propylene copolymerized elastomer (product name: "TAFMER P0280" made by Mitsui Chemicals, Inc., density: 870 kg/$m^3$). As the material of the base layer, 100 parts by mass of a polypropylene resin (product name: "Noblen FS3611" made by Sumitomo Chemical Co., Ltd., density: 890 kg/$m^3$) were used.

A release liner (thickness: 150 μm), formed by a three-layered structure (surface layer (pressure-sensitive adhesive layer side) /base layer/surface layer (back surface side) (thickness: 8 μm/134 μm/8 μm), was produced by a three-layer co-extrusion T-die molding method, with the use of a rubber textured roll as a touch roll on the pressure-sensitive adhesive sheet side and a metallic textured roll as a touch roll on the back surface side.

The surface roughness (Ra) (arithmetic mean roughness: Ra) of the surface layer (pressure-sensitive adhesive layer side) on one side of the obtained release liner was 0.10 μm, and that of the surface layer (back surface side) located opposite thereto was 0.65 μm.

(Pressure-Sensitive Adhesive Layer)

A pressure-sensitive adhesive tape was produced by attaching a pressure-sensitive adhesive layer, the same as that in Example 1, to the surface layer (pressure-sensitive adhesive layer side) on one side of the aforementioned release liner and then by winding it into a roll shape.

[Comparative Example 1]

(Release Liner)

As the material of each of the surface layers (pressure-sensitive adhesive layer side, back surface side), a mixed material was used, the mixed material being made by 100 parts by mass of a linear low-density polyethylene resin (product name "MORETEC 0628D" made by Prime Polymer Co. Ltd. , density: 916 kg/$m^3$) and 50 parts by mass of an ethylene-propylene copolymerized elastomer (product name: "TAFMER P0280" made by Mitsui Chemicals, Inc., density: 870 kg/$m^3$). As the material of the base layer, 100 parts by mass of a polypropylene resin (product name: "Noblen FS3611" made by Sumitomo Chemical Co., Ltd., density: 890 kg/$m^3$) were used.

A release liner (thickness: 150 μm), formed by a three-layered structure (surface layer (pressure-sensitive adhesive sheet side) /base layer/surf ace layer (back surface side) (thickness: 8 μm/134 μm/8 μm), was produced by a three-layer co-extrusion T-die molding method, with the use of a rubber textured roll as a touch roll on the pressure-sensitive adhesive sheet side and a metallic textured roll as a touch roll on the back surface side.

The surface roughness (Ra) (arithmetic mean roughness: Ra) of the surface layer (pressure-sensitive adhesive layer side) on one side of the obtained release liner was 0.82 μm, and that of the surface layer (back surface side) located opposite thereto was 1.35 μm.

(Pressure-Sensitive Adhesive Layer)

A pressure-sensitive adhesive tape was produced by attaching a pressure-sensitive adhesive layer, the same as that in Example 1, to the surface layer (pressure-sensitive adhesive layer side) of the aforementioned release liner and then by winding it into a roll shape.

The properties of the pressure-sensitive adhesive tapes according to Example 1, Example 2, and Comparative Example 1, which were produced as described above, are shown in Table 2.

[Table 2]

| | | | EXAMPLE 1 | EXAMPLE 2 | COMPARATIVE EXAMPLE 1 |
|---|---|---|---|---|---|
| RELEASE LINER | SURFACE LAYER (PRESSURE-SENSITIVE ADHESIVE LAYER SIDE) | OLEFIN RESIN | LDPE1 | LLDPE1 | LLDPE1 |
| | | ELASTOMER | - | ADDITION | ADDITION |
| | | COMPOUNDING RATIO (RESIN/ELASTOMER) | 100/0 | 100/15 | 100/50 |
| | BASE LAYER | RESIN | HDPE/LDPE2 | PP | PP |
| | SURFACE LAYER (BACK SURFACE SIDE) | OLEFIN RESIN | HDPE/LDPE2 | LLDPE1 | LLDPE1 |
| | | ELASTOMER | - | ADDITION | ADDITION |
| | | COMPOUNDING RATIO (RESIN/ELASTOMER) | 100/0 | 100/15 | 100/50 |
| | LAYER THICKNESS (μm) | SURFACE LAYER(PRESSURE-SENSITIVE ADHESIVE LAYER SIDE) | 21 | 8 | 8 |
| | | BASE LAYER | 64 | 134 | 134 |
| | | SURFACE LAYER(BACK SURFACE SIDE) | 64 | 8 | 8 |
| | TOTAL THICKNESS (μm) | | 149 | 150 | 150 |
| PRESSURE-SENSITIVE ADHESIVE LAYER | PRESSURE-SENSITIVE ADHESIVE COMPOSITION | | ACRYLIC | ACRYLIC | ACRYLIC |
| | BUBBLE STRUCTURE | | BUBBLE | BUBBLE | BUBBLE |
| EVALUATION RESULTS | PASTE PROTRUSION PROPERTY | | ○ | ○ | × |
| | CREEP TEST | HOLDING TIME [min] | 3790 | 3373 | 2432 |
| | PEELABILITY | PEELING FORCE [N/25 mm] | 2.53 | 1.3 | 0.79 |

The pressure-sensitive adhesive tapes according to Example 1, Example 2, and Comparative Example 1 were evaluated in accordance with the following evaluation methods. Results of the evaluation are also shown in Table 2.

[Method of Measuring Physical Properties and Method of Evaluating Effects]

(1) Evaluation of Paste Oozing Property

Presence/absence of paste oozing from the side surface of the pressure-sensitive adhesive tape (sample), obtained in each of Examples and Comparative Example, was confirmed in the following way: the sample tape (size: 25 mm in width x 20 m in wound length, wound into a roll shape) was left uncontrolled in an atmosphere of 50°C for one week; and then, after being left uncontrolled in an atmosphere of 23°C x 50% RH for one day, the sample tape was observed. The tape in which no paste oozing was observed was evaluated as O, while the tape in which paste oozing was observed was evaluated as x.

In the pressure-sensitive adhesive tape according to each of Examples 1 and 2, no paste oozing was observed. On the other hand, in the pressure-sensitive adhesive tape according to Comparative Example 1, paste oozing was observed.

Additionally, as a result of intensive study of the evaluation of paste oozing, the present inventors have conceived of the possibility that a paste oozing property can be indirectly evaluated by measuring one of the states associated with paste oozing, other than direct methods such as the aforementioned visual observation.

One of the states is a holding time in a creep test performed in a state where the back surface release layer (b) (second release layer 30 in Fig. 3) of the release liner and the other surface of the pressure-sensitive adhesive layer 12 of the acrylic pressure-sensitive adhesive tape 10 are pressure-bonded. Another of the states is a magnitude of the peeling force between the back surface release layer (b) (second release layer 30 in Fig. 3) of the release liner and the other surface of the pressure-sensitive adhesive layer 12 of the acrylic pressure-sensitive adhesive tape 10. Hereinafter, two evaluation methods will be described in detail.

(2) Holding Time in Creep Test

It can be considered that one reason for paste oozing is that the other surface of the pressure-sensitive adhesive layer is shifted little by little from the back surface release layer (b) of the release liner in a state where the pressure-sensitive adhesive tape is wound into a roll shape. Accordingly, when the pressure-sensitive adhesive force between the pressure-sensitive adhesive layer and the back surface release layer of the separator is large, a slippage is hardly caused and paste oozing can be prevented from occurring.

A measuring method in a creep test will be described with reference to Figs. 4 to 7. Each element of the pressure-sensitive adhesive layer 12 and the release liner 14 included in the acrylic pressure-sensitive adhesive tape 10 will be denoted with the same reference numeral as that in Figs. 1 to 3, and description thereof will be appropriately omitted. The dimensions and size ratios of each element are conveniently set for making the description and illustration thereof easy to understand, and they should not be construed to be limitative.

Fig. 4 (a) is a top view of a provided bakelite plate 32, and Fig. 4(b) is a side view of the bakelite plate 32 illustrated in Fig. 4(a). The size of the bakelite plates 32 illustrated in Fig. 4(a) is 25 mm x 130 mm. After the surface of the bakelite plate 32 is cleaned with IPA (isopropyl alcohol) and sufficiently dried, a double-sided pressure-sensitive adhesive tape 34 (product name: No. 5000NS made by NITTO DENKO CORPORATION, size: 25 mm x 100 mm) is attached to the cleaned surface.

Fig. 5(a) is a top view of a state where the release liner 14 to be measured is attached to the bakelite plate 32 by using the double-sided pressure-sensitive adhesive tape 34, and Fig. 5(b) is a side view of the state in Fig. 5(a).

The pressure-sensitive adhesive surface is exposed by peeling the release liner attached to the double-sided pressure-sensitive adhesive tape 34, and then the first release layer 28 (release layer (a)) of the release liner 14 to be measured (release liner of each of Examples and Comparative Example) is attached to the double-sided pressure-sensitive adhesive tape, thereby allowing the release liner 14 to be fixed to the bakelite plate 32. That is, the release liner 14 is fixed to the bakelite plate 32, with the second release layer 30 (back surface release layer (b)) oriented upward.

Fig. 6 (a) is a top view of a state where the acrylic pressure-sensitive adhesive tape 10 is attached to the second release layer 30 (back surface release layer (b)) of the release liner 14, and Fig. 6 (b) is a side view of the state in Fig. 6 (a).

The surface of the second release layer 30 (back surface release layer (b)) of the release liner 14 is cleaned with IPA. The acrylic pressure-sensitive adhesive tape 10 (with release liner) to be measured is cut into a size of 25 mm x 100 mm.

A test piece 36 is produced by attaching the other surface (surface on the side not contacting the release liner) of the pressure-sensitive adhesive layer of the acrylic pressure-sensitive adhesive tape 10 thus cut to the second release layer 30 (back surface release layer (b)) of the release liner 14 such that the contact area becomes 25 mm in width x

40 mm in length.

In this state, the test piece 36 was pressure-bonded from the upper surface of the acrylic pressure-sensitive adhesive tape 10 by moving a 5-kg roller one way, and it was left still in an atmosphere of room temperature (23°C, 50% RH) for 24 hours. Thereafter, the test piece 36 was left still in an atmosphere of 40°C for 30 minutes.

Fig. 7 is a view illustrating a situation where the test piece is subjected to a creep test. As illustrated in Fig. 7, the test piece 36 was hung to a fixed part 38 such that the bakelite plate 32 is located upward and the acrylic pressure-sensitive adhesive tape 10 located downward, and a weight 40 was hung to the lower end of the acrylic pressure-sensitive adhesive tape 10. The weight 40 was 200 g. That is, a holding time, until the acrylic pressure-sensitive adhesive tape 10 drops off from the test piece 36, is measured by applying a load of 1.96 N (0.2 kgf) to the lower end portion of the pressure-sensitive adhesive tape 10, the lower end portion not contacting the test piece, in the longitudinal direction of the pressure-sensitive adhesive tape, and in an environment of an ambient temperature of 40°C. In the test piece using the pressure-sensitive adhesive tape according to Example 1, drop-off of the tape was not observed even after 63 hours passed. Results of measuring the holding times of the tapes according to Example 1, Example 2, and Comparative Example 1 are shown in Table 2.

As shown in Table 2, the holding time of the pressure-sensitive adhesive tape according to each of Examples 1 and 2 is 2500 minutes or longer. On the other hand, the holding time of the pressure-sensitive adhesive tape according to Comparative Example 1 is shorter than 2500 minutes. Thus, the back surface release layer (b) (second release layer 30) of the release liner is structured such that a holding time, occurring when measured by the aforementioned creep test, is 2500 minutes or longer. It is more preferable that the back surface release layer of the release liner is structured such that the holding time is 3000 minutes or longer. In a pressure-sensitive adhesive tape including a release liner having such a structure, oozing of the pressure-sensitive adhesive is suppressed. In a tape roll in which such a pressure-sensitive adhesive tape is wound into a roll shape, oozing of the pressure-sensitive adhesive is suppressed even in the state of being wound into the roll shape.

(3) Magnitude of Peeling Force between Back Surface Release Layer (b) (Second Release Layer 30 in Fig. 3) of Release Liner and Other Surface of Pressure-Sensitive Adhesive Layer 12 of Acrylic Pressure-Sensitive Adhesive Tape 10.

It can be considered that, in a pressure-sensitive adhesive tape in which larger force is required for peeling a release liner, oozing of the pressure-sensitive adhesive layer 12 from the release liner 14 is more hardly caused in the state of being wound into a roll shape. So, the peeling force between the back surface release layer (b) (second release layer 30 in Fig. 3) of the release liner and the other surface of the pressure-sensitive adhesive layer 12 of the acrylic pressure-sensitive adhesive tape 10 was measured by a peeling test.

An evaluation sample (size: 25 mm in width x 150 mm in length), in a state where a release liner/a pressure-sensitive adhesive layer/a release liner/a pressure-sensitive adhesive layer are laminated each other (i.e., in a state where two pressure-sensitive adhesive tapes are laminated one on another), was first cut out from the pressure-sensitive adhesive tape obtained in each of Examples and Comparative Example. The exposed pressure-sensitive adhesive layer (pressure-sensitive adhesive layer of the pressure-sensitive adhesive tape located downward) was attached to a supporting plate (SUS 304 BA plate, 50 mm x 150 mm). Herein, the longitudinal direction of the sample is the direction in which the pressure-sensitive adhesive sheet flows.

Peeling force, occurring when the pressure-sensitive adhesive tape (release liner/pressure-sensitive adhesive layer) located upward was peeled from the back surface release layer (b) of the release liner of the pressure-sensitive adhesive tape located downward, in a 180°-peeling direction by using a universal testing machine ("TG-1kNB" made by Minebea Co., Ltd.), was measured. A maximum of peeling forces was determined as the peeling force, the maximum being determined as follows: peeling forces were measured by pulling the release liners; and the top 10% and bottom 10% of the measured peeling forces were cut, and the maximum of the remaining 80% thereof was determined as the above maximum.

In the pressure-sensitive adhesive tape according to each of Examples 1 and 2, the peeling force was 1.0 [N/25 mm] or more. In the pressure-sensitive adhesive tape according to each of Examples 1 and 2 that satisfy such conditions, no paste oozing was observed. On the other hand, in the pressure-sensitive adhesive tape according to Comparative Example 1, the peeling force, occurring when peeled in a 180°-peeling direction and at a tensile speed of 300 mm/min, was less than 1.0 [N/25 mm], and paste oozing was observed.

The present invention has been described above based on the embodiments and examples. The embodiments and examples are described for exemplary purposes only, and it can be readily understood by those skilled in the art that various modifications may be made by making various combinations of the aforementioned components or processes, which are also encompassed in the scope of the present invention.

DESCRIPTION OF THE REFERENCE NUMERALS

10 ACRYLIC PRESSURE-SENSITIVE ADHESIVE TAPE
12 PRESSURE-SENSITIVE ADHESIVE LAYER
14 RELEASE LINER
16 CORE LAYER
18 SURFACE LAYER
20 PRESSURE-SENSITIVE ADHESIVE COMPOSITION
22 FINE PARTICLE
24 BUBBLE
26 BASE LAYER
28 FIRST RELEASE LAYER
30 SECOND RELEASE LAYER
32 BAKELITE PLATE
34 DOUBLE-SIDED PRESSURE-SENSITIVE ADHESIVE TAPE
36 TEST PIECE
38 FIXED PART

INDUSTRIAL APPLICABILITY

The present invention can be used for a pressure-sensitive adhesive tape. The invention can be particularly used for a tape roll (double-sided pressure-sensitive adhesive tape wound body) in which a pressure-sensitive adhesive layer, both the surfaces of which are pressure-sensitive adhesive surfaces, and a release liner laminated on the pressure-sensitive adhesive layer are wound into a roll shape.

**Claims**

**1.** A pressure-sensitive adhesive tape comprising:

a pressure-sensitive adhesive layer that contains at least a fine particle and/or a bubble and both the surfaces of which are pressure-sensitive adhesive surfaces; and
a release liner having both a release layer (a) that is provided on one surface (1) of the pressure-sensitive adhesive layer so as to contact the one surface (1) and a back surface release layer (b) located opposite to the release layer (a), wherein
a thickness of the pressure-sensitive adhesive layer is 0.2 to 2.0 mm, and wherein
the back surface release layer (b) of the release liner is structured such that a holding time, measured in the following way (i) to (iv), is 2500 minutes or longer:

(i) a test piece (size: 25 mm in width x 100 mm in length), having the same material as that of the release liner, is provided so as to be fixed to a bakelite plate with the back surface release layer (b) oriented upward;
(ii) the pressure-sensitive adhesive tape (size: 25 mm in width x 100 mm in length) is provided, and the other surface (2) of the pressure-sensitive adhesive layer is attached to the back surface release layer (b) of the test piece such that a contact area becomes 25 mm in width x 40 mm in length;
(iii) the pressure-sensitive adhesive tape is pressure-bonded by moving a 5-kg roller one way; and
(iv) a holding time, until the pressure-sensitive adhesive tape drops off from the test piece, is measured by applying a load of 1.96 N (0.2 kgf) to an end portion of the pressure-sensitive adhesive tape, the end portion not contacting the test piece, in a longitudinal direction of the pressure-sensitive adhesive tape and in an environment of an ambient temperature of 40°C.

**2.** The pressure-sensitive adhesive tape according to claim 1, wherein
peeling force, occurring when the release liner is peeled from the pressure-sensitive adhesive layer in a 180°-peeling direction, at a tensile speed of 300 mm/min, and in an environment of an ambient temperature of 23°C, is 1.0 [N/25 mm] or more.

**3.** The pressure-sensitive adhesive tape according to claim 1 or claim 2, wherein

the release liner includes:

a base layer containing a polyolefin resin; and
a release layer (a) that contains low density polyethylene and is provided on at least one side of the base layer so as to contact the pressure-sensitive adhesive layer.

**4.** The pressure-sensitive adhesive tape according to claim 1 or claim 2, wherein
the release liner includes:

a base layer containing a polyolefin resin;
a release layer (a) that contains linear low-density polyethylene and is provided on one side of the base layer so as to contact the pressure-sensitive adhesive layer; and
a back surface release layer (b) that contains linear low-density polyethylene and is provided on the other side of the base layer.

**5.** The pressure-sensitive adhesive tape according to any one of claims 1 to 4, wherein
the pressure-sensitive adhesive layer includes:

a core layer containing an acrylic polymer (A), a fine particle (B) and/or a bubble (C); and
a surface layer that is provided on one or both sides of the core layer and contains an acrylic polymer (D) and a (meth)acrylic polymer (E) having a weight average molecular weight ($M_{WE}$) of $1000 \leq M_{WE} < 30000$.

**6.** The pressure-sensitive adhesive tape according to claim 5, wherein
a content of the (meth) acrylic polymer (E) is 5 to 45 parts by mass, based on 100 parts by mass of the acrylic polymer (D).

**7.** The pressure-sensitive adhesive tape according to claim 5 or claim 6, wherein
each of the acrylic polymer (A) and the acrylic polymer (D) contains a (meth)acrylic acid alkyl ester as a monomer major component.

**8.** A tape roll in which the pressure-sensitive adhesive tape according to any one of claims 1 to 7 is wound into a roll shape.

FIG.1

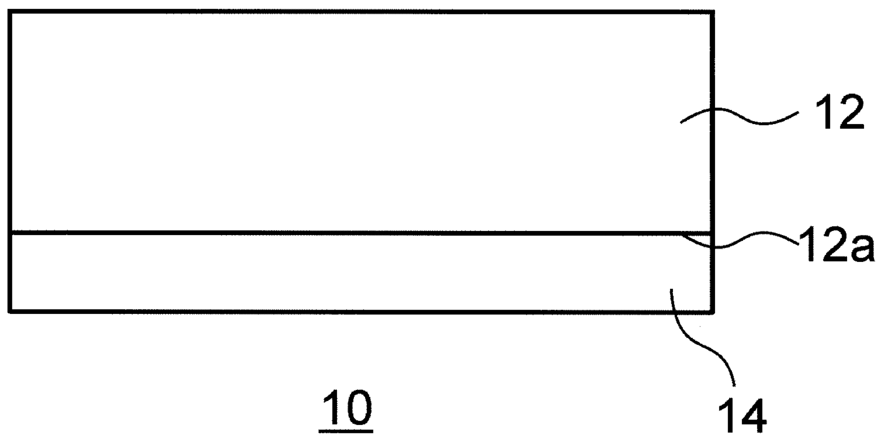


FIG.2

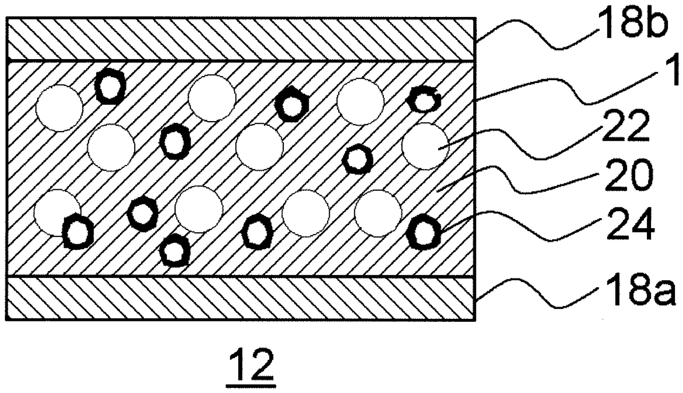


FIG.3

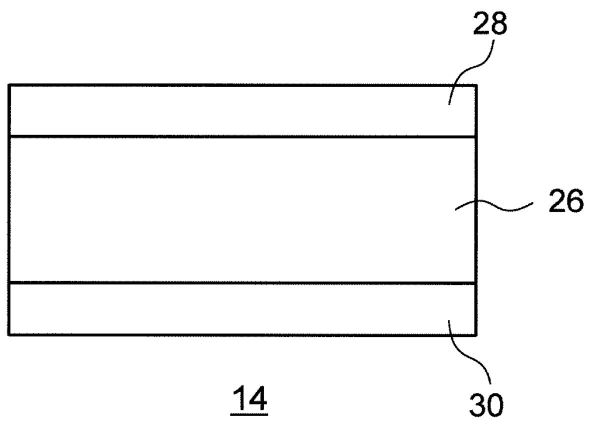

FIG.4

(a)

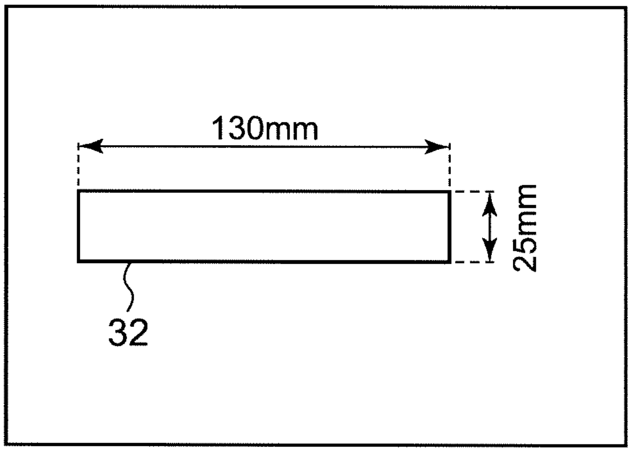


FIG.4

(b)

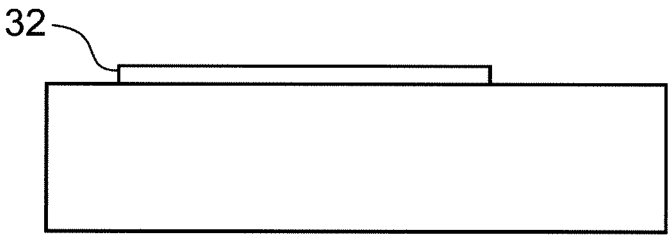

FIG.5

(a)

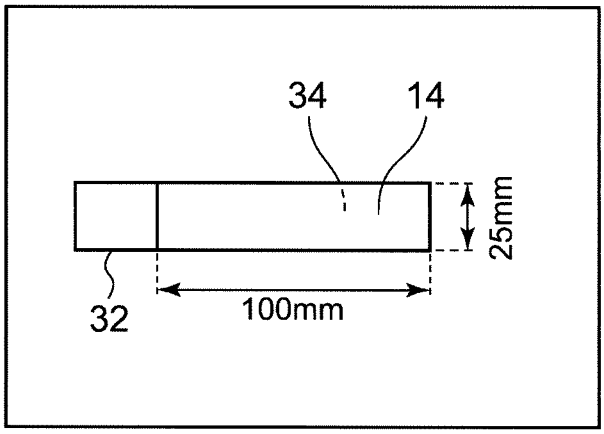


FIG.5

(b)

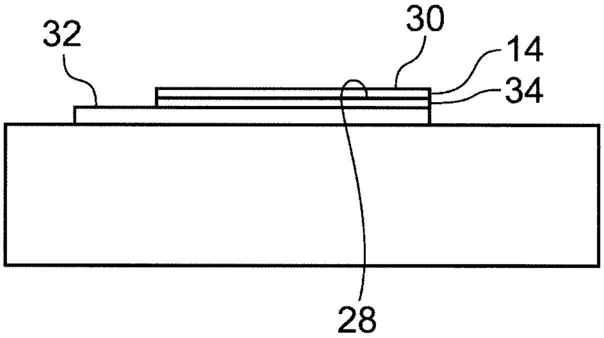

FIG.6

(a)

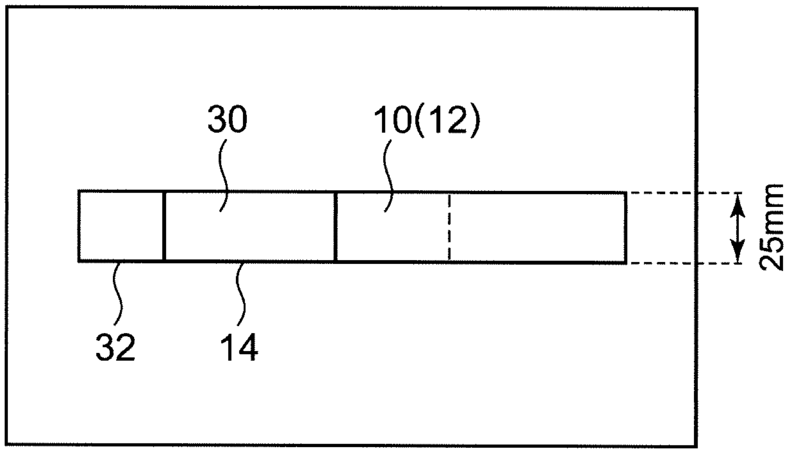


FIG.6

(b)

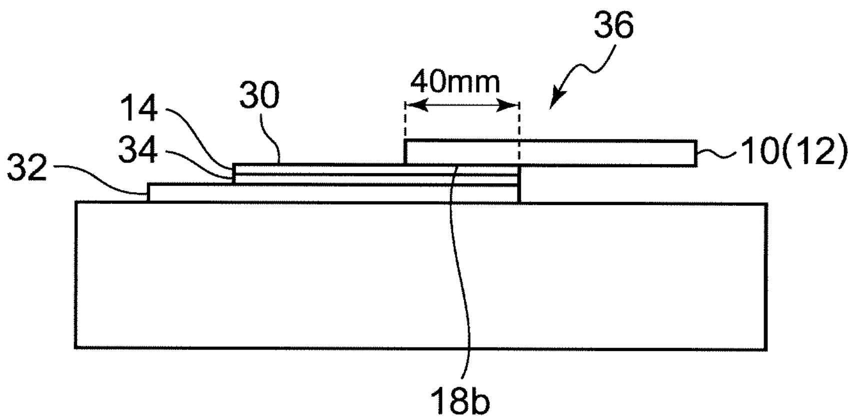

FIG.7

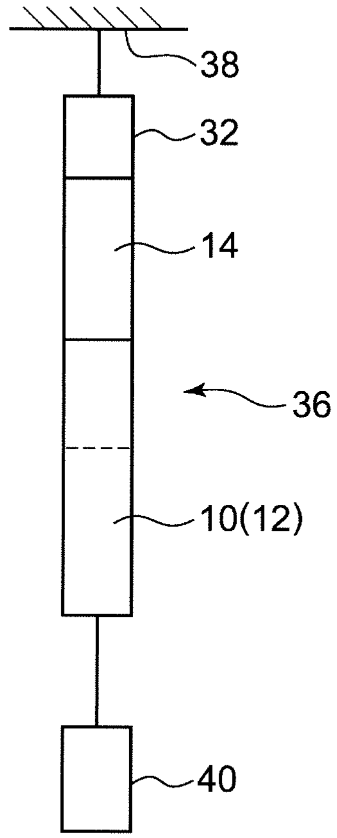

**INTERNATIONAL SEARCH REPORT**

International application No. PCT/JP2012/002353

A. CLASSIFICATION OF SUBJECT MATTER
*C09J7/00*(2006.01)i, *C09J7/02*(2006.01)i, *C09J133/00*(2006.01)i, *C09J133/06*(2006.01)i

According to International Patent Classification (IPC) or to both national classification and IPC

B. FIELDS SEARCHED

Minimum documentation searched (classification system followed by classification symbols)
C09J7/00, C09J7/02, C09J133/00, C09J133/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2009/144891 A1 (Nitto Denko Corp.), 03 December 2009 (03.12.2009), claims; example 4 & JP 2009-286882 A & US 2011/0076489 A1 & EP 2298844 A1 & CN 102046746 A | 1-4,7-8<br>5-6 |
| Y | WO 2011/033736 A1 (Nitto Denko Corp.), 24 March 2011 (24.03.2011), claims & JP 2011-84732 A | 5-6 |
| A | JP 2001-3010 A (Nitto Denko Corp.), 09 January 2001 (09.01.2001), claims; example 1 & US 6506489 B1 | 1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>06 June, 2012 (06.06.12) | Date of mailing of the international search report<br>10 July, 2012 (10.07.12) |
| Name and mailing address of the ISA/<br>Japanese Patent Office<br>Facsimile No. | Authorized officer<br><br>Telephone No. |

Form PCT/ISA/210 (second sheet) (July 2009)

INTERNATIONAL SEARCH REPORT

International application No.
PCT/JP2012/002353

C (Continuation). DOCUMENTS CONSIDERED TO BE RELEVANT

| Category* | Citation of document, with indication, where appropriate, of the relevant passages | Relevant to claim No. |
|---|---|---|
| A | JP 2009-263400 A (Nitto Denko Corp.), 12 November 2009 (12.11.2009), claims 1 to 2, 5 to 6 & US 2009/0263606 A1 & EP 2112209 A1 & CN 101565591 A | 1-8 |
| A | JP 2008-222757 A (Nitto Denko Corp.), 25 September 2008 (25.09.2008), claims; example 1 & US 2008/0220196 A1 & EP 1967563 A1 & CN 101265394 A | 1-8 |
| A | JP 2006-512440 A (3M Innovative Properties Co.), 13 April 2006 (13.04.2006), claim 24 & US 2004/0127121 A1 & EP 1578877 A1 & WO 2004/061033 A1 & CA 2508011 A & KR 10-2005-0086952 A | 1-8 |
| A | WO 2008/069128 A1 (Nitto Denko Corp.), 12 June 2008 (12.06.2008), claims & US 2010/0003441 A1 & EP 2087995 A1 & WO 2008/069128 A1 & CN 101547790 A | 1-8 |

Form PCT/ISA/210 (continuation of second sheet) (July 2009)

**INTERNATIONAL SEARCH REPORT**

International application No.
PCT/JP2012/002353

Claims 1-8 involve all combinations of a release liner and a pressure-sensitive adhesive tape that have the desired property which is to have a holding time, as measured by a specific method, of 2,500 min or longer. However, the modes which are disclosed in the meaning of PCT Article 5 are limited to combinations of the specific release liner and the specific pressure-sensitive adhesive tape which are described in the description. The claims hence lack a support in the meaning of PCT Article 6.

Furthermore, a person skilled in the art cannot understand that what release liner/pressure-sensitive adhesive tape combinations are included in the combinations which have the desired property and that what release liner/pressure-sensitive adhesive tape combinations are not included in those combinations. Claims 1-8 hence do not comply with the requirement of clearness in the meaning of PCT Article 6.

Therefore, a search was made for the range which is supported by and disclosed in the description, i.e., pressure-sensitive adhesive tapes each comprising: an acrylic pressure-sensitive adhesive layer which contains at least fine particles and/or bubbles and in which each surface is a pressure-sensitive adhesive surface; and the release liner described in claim 3 or 4.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 10509198 A
- JP 6207151 A
- JP 1999504054 PCT
- JP 2001049200 A
- JP 2003049130 A
- JP 6200225 A
- JP 2005239831 A